# EUROPÄISCHE PATENTSCHRIFT

(11) **EP 4 331 776 B1**
(45) Veröffentlichungstag und Bekanntmachung des Hinweises auf die Patenterteilung: **02.10.2024**
(21) Anmeldenummer: 22193176.9
(22) Anmeldetag: 31.08.2022
(51) Int. Cl.: B25H 3/02

(54) **WERKZEUGBEREITSTELLUNGSVORRICHTUNG**
TOOL PROVISION DEVICE
DISPOSITIF DE FOURNITURE D'OUTILS

(43) Veröffentlichungstag der Anmeldung: 06.03.2024
(73) Patentinhaber: Hazet-Werk Hermann Zerver GmbH & Co. KG, 42857 Remscheid (DE)
(72) Erfinder: SCHMIDT, Guido, 42857 Remscheid (DE); KOSCHELLA, Christian, 42857 Remscheid (DE)
(74) Vertreter: Ksoll, Peter

(56) Entgegenhaltungen:
- EP-A1- 3 936 285
- AT-U1- 13 969
- DE-A1- 102009 047 084
- US-A1- 2009 071 854
- US-A1- 2019 279 288

## Beschreibung

Die Erfindung betrifft eine Werkzeugbereitstellungsvorrichtung, insbesondere einen Werkstattwagen, eine Werkbank oder einen Werkzeugschrank, gemäß den Merkmalen im Oberbegriff von Anspruch 1. Eine derartige Vorrichtung ist bereits aus der US 2019/279288 A1 bekannt.

Werkzeugbereitstellungsvorrichtungen sind in verschiedenen Ausführungsformen bekannt. Weit verbreitet sind Werkstattwagen, Werkbänke oder Werkzeugschränke. Werkstattwagen der gängigen Bauart weisen ein auf Rollen fahrbares Gehäuse auf, in dem eine Anzahl von Behältnissen in Form von Schubladen über- bzw. untereinander angeordnet sind. Die Schubladen sind üblicherweise auf seitlichen Schienen gelagert und werden frontal aus dem Gehäuse herausgezogen. Auch Werkbänke weisen ein Gehäuse mit darin angeordneten Schubladen auf.

Werkzeugbereitstellungsvorrichtungen haben sich in der Praxis bewährt. Sie dienen zur Aufnahme und/oder dem Transport unterschiedlichster Werkzeuge, die in Ordnungssystemen abgelegt werden können. Im Rahmen dessen sind verschiedene Systeme bekannt, die eine Identifikation und Erfassung der Werkzeuge und eine lückenlose Registrierung von Werkzeugentnahme- und -rückgabevorgängen ermöglichen sollen. Die DE 10 2007 017 207 A1 schlägt in diesem Zusammenhang vor, jedem Werkzeug einen festen Ablageplatz zuzuordnen und mit einem Transponder zu versehen, der mit einem am Ablageplatz angeordneten Empfänger zum Austausch von Signalen koppelbar ist. Dadurch soll sich ständig und permanent kontrollieren lassen, ob ein Werkzeug am Platz oder im Betrieb ist. Ferner soll allen zugelassenen Benutzern von Werkzeugen ein Transponder zugeordnet werden und der Zugang zur Werkzeugverwahrung nur mittels des Transponders möglich sein.

Durch die EP 1 663 586 B1 zählt ein Bestandsüberwachungssystem zum Überwachen der Entnahme und der Rückgabe von Werkzeugen zum Stand der Technik. Jeder Werkzeugaufbewahrungsort umfasst eine individuell ausgestaltete Ausnehmung zum Aufnehmen eines spezifischen Werkzeugs, wobei die Gestalt der Ausnehmung an die Gestalt des Werkzeugs angepasst ist. Ferner sind Detektiermittel zum Detektieren des Vorhandenseins von Werkzeugen und Mittel zum Übertragen von Signalen von den Detektiermitteln zu einer Datenverarbeitungseinrichtung vorgesehen. Die Datenverarbeitungsvorrichtung empfängt die Signale der Detektiermittel und zeichnet die Entnahme und Rückgabe von Werkzeugen auf. Über eine Ausgabevorrichtung erfolgt eine Anzeige des Vorhandenseins und/oder Nichtvorhandenseins von Werkzeugen.

Auch aus der EP 1 808 275 A2 ist eine Werkzeugbereitstellungsvorrichtung mit einem Werkzeugträger bekannt, der eine Ausnehmung zur Aufnahme eines Werkzeugs, insbesondere eines Handwerkzeugs, aufweist. Auf einer der werkzeugseitigen Ausnehmung gegenüberliegenden Seite des Werkzeugträgers ist eine Sensoreinheit angeordnet. Die Sensoreinheit soll ein Vorhandensein und/oder Nichtvorhandensein eines Werkzeugs durch den Werkzeugträger hindurch detektieren.

Ein Verfahren und ein System zur Überwachung des Vorhandenseins eines Werkzeugs an einer vorgegebenen Position beschreibt auch die DE 10 2008 031 372 A1.

Die US 2009/0072029 A1 offenbart ein Bestandskontrollsystem für eine Werkzeugbereitstellungsvorrichtung mit einer Vielzahl von Lagerorten für Bestandsgegenstände, konkret Aufnahmen für Werkzeuge sowie ein Überwachungssystem zur Überwachung des Entfernens und Einsetzen von Werkzeugen aus bzw. in die Aufnahmen.

Weiterhin ist aus der AT 13969 U1 eine Werkzeugausgabeeinrichtung bekannt, bei der jedem Werkzeug ein bestimmter Platz zugeordnet ist. Jedem Platz ist ein Sensor zugeordnet, die mit einer Auswerteeinrichtung in Verbindung stehen über welche eine Auswertung des Vorhandenseins oder Nicht-Vorhandenseins eines auszugebenden Werkzeugs erfolgt.

In der US 2010/0039513 A1 werden Systeme zum Überwachen eines Bestandszustands von Objekten, basierend auf erfassten Bildern, beschrieben. Insbesondere von Werkzeugen in Schubladen einer Werkzeugbereitstellungsvorrichtung.

Ein System zum Verfolgen und Kontrollieren des Zugriffs von Objekten geht aus der US 7,317,393 B2 hervor. Das System umfasst eine Aufbewahrungseinheit in Form eines abschließbaren Schranks zum Aufbewahren, Ausgeben und Aufnehmen von Gegenständen. Eine Computersteuerung ist mit dem Schrank gekoppelt und umfasst eine Benutzerschnittstelle zur Identifikation bzw. Verifikation eines Benutzers. Mittels der Computersteuerung wird des Weiteren eine Überwachung der Entnahme und Rückgabe von Gegenständen vorgenommen.

Die Zuverlässigkeit der Werkzeugdetektierung in der Praxis ist verbesserungswürdig. Insbesondere stößt eine berührungslose Werkzeugdetektierung und Datenübertragung innerhalb des Systems an Grenzen. Besondere Bedeutung hat die Kontrolle auf Vollständigkeit der Werkzeuge vor und nach Arbeiten in sensiblen Bereichen, wie beispielsweise Montage-, Wartungs- und/oder Reparaturarbeiten an Flugzeugen. Verlorengegangenes Werkzeug kann zu erheblichen Beschädigungen eines Flugzeugs führen. Im Rahmen von Maßnahmen gegen Foreign Object Damage (FOD) ist eine besonders effektive Kontrolle auf Vollständigkeit der Werkzeuge und eine Nachverfolgung zur Vermeidung von Beschädigungen notwendig.

Der Erfindung liegt ausgehend vom Stand der Technik die Aufgabe zu Grunde, eine Werkzeugbereitstellungsvorrichtung mit einer Werkzeugidentifikation- und -überwachung bei einfacher Ausgestaltung in der Zuverlässigkeit und in deren Praktikabilität insgesamt zu verbessern.

Die Lösung dieser Aufgabe besteht nach der Erfindung in einer Werkzeugbereitstellungsvorrichtung gemäß den Merkmalen von Anspruch 1.

Vorteilhafte Ausgestaltungen und Weiterbildungen der erfindungsgemäßen Werkzeugbereitstellungsvorrichtung sind Gegenstand der abhängigen Ansprüche.

Ausgestaltungen und Modifikationen von Merkmalen der Werkzeugbereitstellungsvorrichtung, die einzeln oder in Kombination die Werkzeugbereitstellungsvorrichtung funktional und anwendungstechnisch vorteilhaft ausgestalten, ergeben sich auch aus der Beschreibung und den beigefügten Zeichnungen.

Bei einer erfindungsgemäßen Werkzeugbereitstellungsvorrichtung handelt es sich insbesondere um einen Werkstattwagen, eine Werkbank oder einen Werkzeugschrank. Die Werkzeugbereitstellungsvorrichtung weist ein Gehäuse und darin angeordnete Behältnisse auf, wobei in einem Behältnis zumindest ein Werkzeugträger vorgesehen ist, der mehrere Aufnahmen für Werkzeuge aufweist. Den Aufnahmen ist jeweils ein Detektor zugeordnet zur Detektion des Vorhandenseins eines Werkzeugs in der Aufnahme. Insbesondere handelt es sich bei den Behältnissen um Schubladen oder Schubfächer.

Erfindungsgemäß weist der Detektor einen Tastschalter mit einem Tastelement auf, wobei das Tastelement eine Öffnung im Werkzeugträger durchgreift und mit einer Wirkfläche in die Aufnahme für ein Werkzeug ragt. Die Wirkfläche kann insbesondere an der Stirnseite des Tastelements aber auch an einer Seitenfläche des Tastelements vorgesehen bzw. durch diese gebildet sein. Wesentlich ist, dass die Wirkfläche so in die Aufnahme ragt, dass der Tastschalter durch ein eingelegtes Werkzeug aktiviert und bei Entnahme des Werkzeugs deaktiviert wird.

Erfindungsgemäß ist des Weiteren vorgesehen, dass es Aufnahmen erster Art gibt, bei denen die Öffnung ein die Wand des Werkzeugträgers unterhalb der Aufnahme durchsetzender Durchbruch ist, wobei das Tastelement von unten durch den Boden einer Aufnahme in die Aufnahme ragt. Des Weiteren gibt es Aufnahmen zweiter Art, bei welcher das Tastelement seitlich, also von einer Seitenwand aus, in die Aufnahme ragt. Insbesondere ist die Öffnung für das Tastelement ein die Wand des Werkzeugträgers seitlich der Aufnahme durchsetzender Durchbruch oder Ausschnitt. Weiterhin ist erfindungsgemäß vorgesehen, dass in zumindest einer Aufnahme ein Halterelement angeordnet ist, welches als Andruckverstärker für ein Werkzeug fungiert.

Die Aufnahmen erster Art und die Aufnahmen zweiter Art im Werkzeugträger unterscheiden sich durch die Anordnung und Ausgestaltung des Durchbruchs für das Tastelement. Bei den Aufnahmen erster Art ist die Öffnung für das Tastelement ein die Wand des Werkzeugträgers unterhalb der Aufnahme durchsetzender Durchbruch. Das Tastelement ist von unten durch den Boden der Aufnahme geführt und ragt in die Aufnahme hinein. Beim Einlegen eines Werkzeugs wird das Tastelement vertikal bewegt und durch das Gewicht nach unten gedrückt. Bei der Entnahme des entsprechenden Werkzeugs bewegt sich das Tastelement aufwärts bzw. nach oben.

Aufnahmen erster Art sind insbesondere für Handwerkzeuge wie Drehmomentschlüssel, Hämmer oder Zangen vorgesehen.

Bei Werkzeugaufnahmen zweiter Art ist die Öffnung für das Tastelement ein die Wand des Werkzeugträgers seitlich der Aufnahme durchsetzender Durchbruch. Der Durchbruch kann sich vom Boden der Werkzeugaufnahme ausgehend bis in die Seitenwand der Aufnahme erstrecken. Das Tastelement ragt seitlich durch die Wand des Werkzeugträgers in die Aufnahme hinein und kontaktiert ein eingelegtes Werkzeug seitlich. Hierbei kommt das Tastelement an einem Abschnitt des Werkzeugs zur Anlage, welcher sich benachbart zur Seitenwand der Aufnahme im Wesentlichen parallel hierzu erstreckt.

Die Aufnahmen zweiter Art sind insbesondere vorgesehen für Werkzeuge wie Stecknüsse, Steckschlüssel bzw. - einsätze oder Schraubbits.

Der Tastschalter ist das Detektierelement, dass durch Drücken auf sein Tastelement aktiviert und durch Loslassen wieder deaktiviert wird. Auf diese Weise ist ein Vorhandensein bzw. Nichtvorhandensein eines Werkzeugs in einer Aufnahme detektierbar. Das Gewicht eines in einer Aufnahme befindlichen Werkzeugs drückt das Tastelement des Tastschalters und aktiviert diesen. Durch den Druck stellt der Tastschalter eine Verbindung her, die beim Loslassen des Tastschalters, also bei Entnahme eines Werkzeugs, wieder unterbrochen wird. Durch eine im Tastschalter integrierte und auf das Tastelement wirkende Feder nimmt der Tastschalter wieder seine Ausgangsposition ein.

Die in die Aufnahme vorstehende Stellung des Tastelements ist die Ausgangsposition eines Tastschalters, die durch ein Werkzeug abgesenkte bzw. gedrückte Stellung des Tastelements ist die Auslöseposition des Tastschalters, wodurch ein Signal erzeugt und an eine Datenverarbeitungseinheit übertragen wird.

Bei Aufnahmen erster Art kommt ein Werkzeug auf der Wirkfläche des durch den Boden einer Aufnahme vorstehenden Tastelements zur Anlage und drückt dieses herunter. Bei Aufnahmen zweiter Art kommt ein eingelegtes Werkzeug an der Wirkfläche des durch einen Durchbruch in der Seitenwand in der Aufnahme ragenden Tastelements zur Anlage und drängt bzw. drückt das Tastelement zur Seite.

Die Erfindung macht sich eine elektro-mechanische Detektion eines Werkzeugs in einer Aufnahme zu eigen, bei der der Detektor bzw. der Tastschalter des Detektors in Kontakt mit einem Werkzeug gelangt und durch das Werkzeug selbst unmittelbar aktiviert wird.

Die Detektion des Vorhandenseins eines Werkzeugs arbeitet zuverlässig. Störeinflüsse sind kaum von Relevanz. So beeinflusst beispielsweise ein verschmutztes Werkzeug die Wirksamkeit der Detektion nicht. Eine manuelle Markierung oder Sensormarker an den Werkzeugen selber sind nicht notwendig.

Vorteilhafte Ausführungsformen eines Tastelements sehen vor, dass das Tastelement ein Stößel, insbesondere ein federbelasteter Stößel oder ein Schenkel, insbesondere ein Federschenkel oder ein Hebel, insbesondere ein Federhebel ist.

Die Tastelemente, also beispielsweise Taststifte, können eine bestimmte auf einen Werkzeugtypus angepasste Oberflächenkontur besitzen, um die Lage der Werkzeuge besser ertasten zu können. Beispielsweise kann die Oberflächenkontur auf einen Winkelschraubendreher oder einen Sechskant-Inbusschlüssel abgestimmt sein.

Ein weiterer vorteilhafter Aspekt der Erfindung sieht vor, dass der zumindest eine Tastschalter in einem Tragkörper angeordnet ist. Vorzugsweise sind mehrere Tastschalter in einem Tragkörper, vorteilhafter Weise in Reihe angeordnet und auf einer Leiterplatine positioniert. Die Leiterplatine mit den Tastschaltern ist im Tragkörper aufgenommen und wird mit dem Tragkörper im Werkzeugträger angeordnet. Die Anordnung erfolgt in erfindungsgemäßer Ausgestaltung so, dass die einzelnen Tastelemente der Tastschalter jeweils eine Öffnung im Werkzeugträger durchgreifen und mit ihrer Wirkfläche in die Aufnahme ragen. Der Tragkörper kann Bestandteil des Werkzeugträger bilden. Insbesondere bei Aufnahmen zweiter Art bilden Teile des Tragkörpers Seitenflächen der Aufnahme zweiter Art.

Die Öffnung ist bei Aufnahmen erster Art ein die Wand des Werkzeugträgers im Bereich unterhalb der Aufnahme durchsetzender Durchbruch. Die Öffnung ist auf die Abmessungen des Tastelements eines Tastschalters abgestimmt, so dass dieser leicht in der Öffnung hin und her bewegt werden kann. Der Werkzeugträger selbst ist besonders bevorzugt durch eine Weichschaumeinlage gebildet. Vorzugsweise weist eine Aufnahme eine an die Gestalt eines spezifischen Werkzeugs angepasste Ausnehmung im Werkzeugträger auf.

Bei Aufnahmen zweiter Art ist die Öffnung ein die Wand des Werkzeugträgers seitlich der Aufnahme durchsetzender Durchbruch bzw. ein seitlicher Ausschnitt im Werkzeugträger. Das Tastelement ist als Hebel- oder Federschenkel ausgeführt, insbesondere ein federbelasteter Hebel und ragt seitlich in die Aufnahme.

Den Aufnahmen im Werkzeugträger können Identifikationsmerkmale für die einzelnen Werkzeuge zugeordnet sein. Hierbei kann es sich um eine Beschriftung, beispielsweise eine Werkzeug-Artikelnummer, aber auch um ein Symbol oder ein Piktogramm handeln. Mittels der Identifikationsmerkmale kann ein Werkzeug eine Aufnahme leicht und schnell zugeordnet werden.

Vorteilhaft ist erfindungsgemäß die Kombination von mehreren Tastschaltern, wobei Tastschalter vorgesehen sind, deren Tastelement von unten in die Aufnahme, also durch den Boden einer Aufnahme, ragen und des Weiteren Detektoren mit Tastschaltern vorgesehen sind, deren Tastelement seitlich in eine Aufnahme ragen, wobei also die Tastelemente, mit ihren Wirkflächen Öffnungen in Form von Durchbrechungen in einer Seitenwand der Aufnahme des Werkzeugträgers durchsetzen.

Ein Aspekt der Erfindung sieht vor, dass der Tastschalter sich zumindest mittelbar am Boden eines Behältnisses, insbesondere einer Schublade, abstützt. Dies ist vorteilhaft für Krafteinleitung, Sensibilität und Auslösung der Detektoren. Ein oder mehrere Tastschalter können in einem Tragkörper angeordnet sein bzw. in einem Tragkörper aufgenommen sein. Über dem Tragkörper stützt sich der Tastschalter mittelbar am Boden eines Behältnisses ab. Weiterhin kann ein Tragkörper zumindest mittelbar am Boden eines Behältnisses abgestützt sein.

Eine vorteilhafte Ausgestaltung sieht vor, dass ein Tastelement bzw. ein Tastschalter mit dem Tastelement in einem Gehäuse integriert ist. Das Gehäuse bildet den Tragkörper für das Tastelement und verbessert die Funktionssicherheit. Vorteilhafterweise sitzt das Gehäuse mit dem integrierten Taststift direkt auf einer Platine. Insbesondere gewährleistet das Gehäuse die Funktionalität und mechanische Beweglichkeit eines Tastelements.

Eine für die Praxis besonders vorteilhafte Ausgestaltung sieht vor, dass der Tastschalter auf einer Leiterplatte befestigt ist, welche auf dem Boden des Behältnisses unterhalb des Werkzeugträgers angeordnet ist. Ein Werkzeugträger weist mehrere Aufnahmen auf, wobei jeder Aufnahme ein Detektor zugeordnet ist. Vorteilhafterweise sind hierbei alle Detektoren in einer Horizontalebene angeordnet. Diese erhöht die Zuverlässigkeit und die Praktikabilität der Detektoren und die Zusammenfassung mehrerer Detektoren in einer Detektorfläche. Ein weiterer Vorteil ist, dass die Tastelemente, ebenso wie die Leiterplatten, keinen zusätzlichen oder nur unwesentlich mehr Raum in einem Behältnis benötigen, da die Bauteile im Wesentlichen in oder unter dem Werkzeugträger, insbesondere in einem durch eine Weichschaumeinlage gebildeten Werkzeugträger, positioniert sind.

Die Tastschalter der Detektoren werden insbesondere gewichtsbelastet durch das Gewicht eines Werkzeugs ausgelöst bzw. aktiviert. Reicht das Gewicht eines Werkzeugs selber nicht aus, sieht die Erfindung vor, dass in zumindest einer Aufnahme ein Halterelement angeordnet ist, insbesondere ein klammerförmiges Halterelement oder ein magnetisch wirkendes Halterelement, also ein Magnethalterelement. Das Halterelement ist dafür bestimmt und ausgelegt, dass ein Werkzeug mittels eines bestimmten Kraftaufwandes in eine Aufnahme gesetzt werden muss. Durch diesen Kraftaufwand wird der Tastschalter über das Werkzeug betätigt. Das Halterelement fungiert als Andruckverstärker des Werkzeugs in der Aufnahme. Das Halterelement hält das Werkzeug in der Aufnahme und stellt so sicher, dass der Tastschalter in der Auslösestellung verbleibt, solange ein Werkzeug in der Aufnahme angeordnet ist. Durch die Andruckverstärkung eines Werkzeugs mittels des Halteelements wird das Werkzeug in einer Aufnahme fixiert.

Besonders bei leichteren Werkzeugen sind in einer Aufnahme Halterelemente in Form von Magnethaltern integriert, um die Werkzeuge in Position auf die Tastschalter zu drücken. Dies ist auch vorteilhaft bei Erschütterungen und/oder Bewegungen der Werkzeugbereitstellungsvorrichtung, beispielsweise eines Werkstattwagens.

Die Anordnung bzw. Anzahl von Aufnahmen mit integriertem Halteelement, welches als Andruckverstärker für ein Werkzeug fungiert, erfolgt in Abstimmung auf die Bestückung der in dem Behältnis bzw. einer Schublade aufzunehmenden Werkzeuge, deren Geometrie und/oder Gewicht. Gleiches gilt für die Aufnahmen erster Art und die Aufnahmen zweiter Art.

Zur Erfassung und Auswertung der von einem bzw. den Detektoren generierten Signale und deren Weiterverarbeitung ist eine Datenverarbeitungseinheit vorgesehen. Diese ist dazu bestimmt und ausgelegt Signale von dem bzw. den Detektoren zu empfangen und eine Entnahme und Rückgabe eines Werkzeugs aufzuzeichnen und zu dokumentieren.

Mittels der Datenverarbeitungseinheit werden die Werkzeuge identifiziert. Dies erfolgt durch Auswertung und Verarbeitung der von den Detektoren empfangenen Signale und deren Zuordnung zu den Aufnahmen im Werkzeugträger.

Mittels der Datenverarbeitungseinheit können darüber hinaus auch Werkzeugnutzungsdaten, beispielsweise die Ausgabedauer bzw. -zeit, aber auch Prüfintervalle der Werkzeuge bzw. deren Kalibrierung und/oder Werkzeugzustandsdaten sowie Werkzeugbenutzerdaten erfasst werden.

Bei der Entnahme eines Werkzeugs aus der Aufnahme des Werkzeugträgers ebenso wie bei der Rückgabe eines Werkzeugs in die Aufnahme wird durch den der jeweiligen Aufnahme zugeordneten Detektor durch Verlagerung des Tastelements über den Tastschalter ein Signal generiert. Diese Signale werden über den Bestandteil der Datenverarbeitungseinheit bildende Software und Elektronik registriert. Das Fehlen und Vorhandensein eines Werkzeugs wird an eine Auswerteeinheit übertragen, insbesondere kann die Information auf einem WLAN gebundenen Gerät angezeigt werden. Dies funktioniert sowohl als Einzelplatzlösung für eine Werkzeugbereitstellungsvorrichtung als auch als Server-Lösung mit einer Gesamtübersicht über alle angeschlossenen Werkzeugbereitstellungsvorrichtungen, insbesondere einer Vielzahl von Werkstattwagen, Werkbänken oder stationären Werkzeugschränken. Das Werkzeug kann identifiziert werden und zu dem Werkzeug können neben den üblichen Informationen, wie Werkzeugtyp und Alter etc., auch weitere Informationen, beispielsweise Prüf-, Inspektion-, oder Kalibrierungsintervalle oder Nutzungszeit hinterlegt sein.

Der Werkzeugbestand wird automatisiert überwacht und verwaltet. Es erfolgt eine automatische und sofortige Bestandsaufnahme der Werkzeuge in der Werkzeugbereitstellungsvorrichtung. Die Zugriffskontrolle sowie die Rückführbarkeit ist vereinfacht. Identifikation und Verwaltung der Werkzeuge erfolgt in Echtzeit. Eine Benutzererkennung an der Werkzeugbereitstellungsvorrichtung kann durch einen personalisierten Zugangsausweis oder einen persönlichen Code erfolgen. Zum Identifikations- und Verwaltungssystem gehört eine Systemsoftware die beim Benutzen der Werkzeugbereitstellungsvorrichtung aktiviert wird. Ein Werkzeug kann vom Benutzer entnommen oder nach Gebrauch zurückgegeben werden. Die Entnahme oder Rückgabe wird gespeichert. Zugehörige Einsatzprozesse bzw. -zeiten werden ermittelt und archiviert. Eine automatische Bestandsaufnahme kann erfolgen beim Schließen einzelner Schubladen oder auch bei einem Verriegelungsvorgang der Werkzeugbereitstellungsvorrichtung.

Eine vorteilhafte Ausgestaltung sieht vor, dass auf den Leiterplatten der Umriss eines oder mehrerer Werkzeuge dargestellt ist. Der Umriss stellt für den Betrachter eine Kurve dar, die das Objekt von seiner Umgebung abgrenzt. Diese Maßnahme erleichtert die Bestückung der Leiterplatten selber aber auch der Anordnung der Werkzeugträger auf den Leiterplatten in einer Schublade.

Selbstverständlich können im Rahmen der Erfindung auch Leiterplatten eingesetzt werden, bei welchen der Umriss der Werkzeuge nicht auf der Oberfläche der Leiterplatten dargestellt ist.

Vorzugsweise sind auf dem Boden einer Schublade mehrere Leiterplatten nebeneinander angeordnet. Hierbei ist es zweckmäßig, wenn jede Leiterplatte ein auf die Abmessung des Behältnisses angepasstes Modulmaß besitzt, so dass die Leiterplatten zusammen die Bodenfläche abdecken. Insbesondere sind zwei, drei oder vier Leiterplatten nebeneinander auf der Bodenfläche eines Behältnisses angeordnet.

Eine die Praktikabilität der Werkzeugbereitstellungsvorrichtung weiter steigernde Maßnahme sieht vor, dass im Gehäuse eine oder mehrere Kabeltragvorrichtungen angeordnet sind für elektrische Verbindungsleitungen. Die Kabeltragvorrichtung dient insbesondere zur Halterung und Führung von elektrischen Verbindungsleitungen zwischen den Leiterplatten, in den Behältnissen sowie den Leiterplatten und der Datenverarbeitungseinheit. Die Kabeltragvorrichtung ermöglicht eine Bewegung der elektrischen Verbindungsleitungen, insbesondere beim Herausziehen und Zurückschieben der Schubladen.

In der Praxis sind im Gehäuse mehrere bewegliche Kabeltragvorrichtungen angeordnet. Diese tragen die Energieversorgungsleitung und die Datenkommunikationsleitungen zu jedem einzelnen Behältnis, insbesondere jeder einzelnen Schublade. Demzufolge ist pro Behältnis eine Kabeltragvorrichtung vorgesehen.

Im Gehäuse selbst ist des Weiteren noch ein Kabelkanal, insbesondere in Blechbauweise, also vorzugsweise ein Blechbauteil, festgefügt, insbesondere verschweißt. An diesem Kanal werden die einzelnen beweglichen Kabeltragvorrichtungen bei der Montage inklusive elektrischer Leitungen, also Kabel angeschraubt oder vernietet.

Vorzugsweise sind die Kabelarme der Kabeltragvorrichtung an den Behältnissen mit lösbaren Verbindungselementen, beispielsweise Schrauben, festgelegt. Dies erleichtert die Montage und auch einen etwaigen Austausch der Kabeltragvorrichtung oder von beidem derselben.

Ein weiterer vorteilhafter Aspekt der Erfindung sieht ein Verriegelungssystem vor mittels dessen die Behältnisse im Gehäuse zentral verriegelbar sind. Vorzugsweise ist das Verriegelungssystem von einer zentralen Schlosseinheit aus betätigbar. Insbesondere kann ein berührungsloses Öffnen bzw. Schließen des Verriegelungssystems, beispielsweise mittels eines RFID-Transponders erfolgen. Das elektronische Verriegelungssystem weist bevorzugt einen elektrischen Stellmotor auf, mittels dessen eine Verriegelungsleiste bewegt und die Verrieglung in die Offen- bzw. Schließstellung überführt werden kann. Die Bedienung erfolgt über eine Benutzeridentifikation, beispielsweise einen PIN-Code oder einen Identifikationsausweis. Hierbei kann es sich um einen RFID-Sensor bzw. Transponder oder ähnliche Erkennungsmarken (Token) handeln. Mittels eines entsprechend ausgelegten Sender-Empfängersystems können auch Werkzeugbenutzerdaten erfasst werden.

Softwaregesteuert kann das Verriegelungssystem auch automatisch in den Verriegelungszustand übergehen. Dies kann beispielweise zeitgesteuert erfolgen. Hierfür ist eine Zeitschaltung integriert, so dass die Werkzeugbereitstellungsvorrichtung nach einem vorgegebenen Zeitraum, in dem keine Benutzung erfolgt ist, automatisch verschlossen wird und in den Verriegelungszustand übergeht.

Das zur erfindungsgemäßen Werkzeugbereitstellungsvorrichtung gehörende Verriegelungssystem weist eine mechanische Not-Entriegelung auf, über welches die Verriegelung der Werkzeugbereitstellungsvorrichtung bei Ausfall des elektronischen Verriegelungssystems betätigt werden kann. Insbesondere umfasst die Not-Entriegelung ein Zylinderschloss.

Die Werkzeugbereitstellungsvorrichtung weist eine Funktionselektronik auf, wobei die Funktionselektronik mindestens einen Aktor ansteuert. Der Aktor ist insbesondere zum Betätigen einer Verriegelungsleiste des Verriegelungssystems vorgesehen.

Auch kann die Funktionselektronik ein Drahtloskommunikationsmodul aufweisen. Hierbei handelt es sich insbesondere um ein Bluetooth- oder WLAN-Modul.

Das Drahtloskommunikationsmodul ist integrativer Bestandteil der Datenverarbeitungseinheit. Auf diese Weise kann die Werkzeugbereitstellungsvorrichtung ein vorrichtungsbezogenes WLAN-Netz bereitstellen mit einem Wireless Access Point, also einen drahtlosen Zugangspunkt, der als Schnittstelle für kabellose Kommunikationsgeräte fungiert. Auf diese Weise ist eine Kommunikation der Werkzeugbereitstellungsvorrichtung mit einem Mobilgerät, beispielsweise einem Smartphone oder Smarttablet oder auch anderen Operatoren möglich. Auch können mehrere Werkzeugbereitstellungsvorrichtungen in einem Netz zusammengeschlossen sein, so dass eine zentrale bzw. dezentrale Überwachung möglich ist.

In diesem Zusammenhang sieht eine besonders vorteilhafte Ausgestaltung vor, dass ein mit einer Datenverarbeitungseinheit kommunizierendes Display vorgesehen ist. Über das Display kann das Vorhandensein bzw. Nichtvorhandensein von Werkzeugen, aber auch Werkzeugnutzungsdaten und/oder Benutzerdaten zur Anzeige gebracht werden. Das Display ist vorzugsweise in einem Funktionsbereich an der Werkzeugbereitstellungsvorrichtung angeordnet bzw. integriert. Das Display zeigt den Status der Werkzeuge und/oder den Schließzustand der Werkzeugbereitstellungsvorrichtung und ähnliches an, wie beispielsweise den Akkuladezustand. Auch Informationen über Peripherkomponenten der Werkzeugbereitstellungsvorrichtung, beispielsweise Datenverarbeitungskabel, insbesondere deren Vorhanden- oder Nichtvorhandensein, ebenso wie etwaiger Betriebsmodi, können detektiert und über die Datenverarbeitungseinheit sowie das Display zur Anzeige gebracht werden.

Die Werkzeugbereitstellungsvorrichtung ist mit einer elektrischen Energieversorgung ausgerüstet. Zweckmäßigerweise erfolgt die Energieversorgung über einen Stromspeicher, insbesondere einen Lithium-Ionen-Akkumulator. Der Akkumulator kann in einer leicht zugänglichen Halterung an der Werkzeugbereitstellungsvorrichtung montiert sein. Diese Halterung ermöglicht ein leichtes und schnelles Austauschen eines Akkumulators. In der Praxis ist der Akku vorzugsweise durch ein umhüllendes Gehäuse abgedeckt. Das Gehäuse hat insbesondere eine Schutzfunktion, führt aber auch zu einer optischen Verbesserung. Weiterhin kann das Akku-Gehäuse abschließbar ausgeführt werden, um unbefugten Zugriff auf den Akkumulator zu verhindern.

Weiterhin vorteilhaft ist in oder an der Werkzeugbereitstellungsvorrichtung zumindest ein Signalelement vorgesehen, welches dazu bestimmt und ausgebildet ist, das Vorhandensein oder Fehlen eines Werkzeugs in einem Behältnis zu signalisieren. Insbesondere handelt es sich bei dem Signalelement um ein optisches Signalelement, vorzugsweise in Form eines Lichtelements, beispielsweise einer Leuchtdiode (LED). Das Signalelement kann in einem Behältnis, vorzugsweise in der Weichschaumeinlage einer Schublade angeordnet sein.

Es können auch akustische Signalelemente Anwendung finden.

Eine besonders vorteilhafte Ausführungsform sieht vor, dass das Signalelement oder eine mehrere Signalelemente aufweisende Signaleinheit in einem am Gehäuse vorgesehenen Kantenschutzelement angeordnet ist. Insbesondere erstreckt sich das Kantenschutzelement in Längsrichtung einer Seitenkante des Gehäuses, und zwar an der vorderen Gehäuseseite hin. Zumindest in einem seitlich am Gehäuse vorgesehenen Kantenschutzelement sind Signalelemente, insbesondere LEDs integriert. Ein solches Kantenschutzelement fungiert als Prall- bzw. Rammschutz und ist aus elastischen Werkstoff, insbesondere Kunststoffmaterial hergestellt. Für die Aufnahme der Signalelemente bzw. der Signaleinheit mit mehreren Signalelementen sind Aussparungen im Kantenschutzelement vorgesehen. Vorzugsweise liegen die Aussparungen waagerecht auf gleicher Höhe wie die Oberkante eines Behältnisses insbesondere einer Schublade, und zwar bevorzugt auf gleicher Höhe wie die Schubladengriffe. Jede Signaleinheit repräsentiert folglich die benachbart angeordnete Schublade und damit die in der jeweiligen Schublade vorhandenen Werkzeuge. Optisch erfolgt eine Anzeige des Werkzeugbestands. Ein grünes Signal zeigt an, dass die Werkzeugbestückung in der jeweiligen Schublade vollständig ist. Ein rotes Signal zeigt an, dass der Werkzeugsatz in der Schublade nicht vollzählig ist. Vorteilhaft ist die Darstellung in dieser Art, da der Benutzer schnell und einfach signalisiert bekommt, ob Werkzeug fehlt und in welcher Schublade. Die Anordnung der Signalelemente bzw. der Signaleinheit vorne benachbart zur jeweiligen Schubladenebene ist gut sichtbar und zwar von der Hauptarbeitsrichtung vor dem Werkstattwagen.

Möglich ist es auch, dass das Signalelement an dem Behältnis, beispielsweise der Frontfläche einer Schublade, angeordnet ist. Des Weiteren kann das Signalelement auch innerhalb des Displays oder des Funktionsbereichs der Werkzeugbereitstellungsvorrichtung angeordnet sein.

Die Visualisierung über das zumindest eine, vorzugsweise eine Mehrzahl von Signalelementen, insbesondere in Form von optischen Kontrollleuchten (LED), zeigt dem Anwender schnell an, ob alle Werkzeuge in einer Schublade vorhanden sind. Hierbei können beispielsweise farblich unterschiedliche Signale generiert werden. Ein beispielsweise rotes Licht zeigt an, dass ein Werkzeug fehlt, ein beispielsweise blaues oder grünes Licht signalisiert dem Anwender, dass alle Werkzeuge vorhanden sind. Vorzugsweise kommen LEDs mit Farbwechselfunktion zum Einsatz.

Im Rahmen der Erfindung ist zumindest eine Signaleinheit vorgesehen, welche dazu eingerichtet und bestimmt ist den Schließzustand der Werkzeugbereitstellungsvorrichtung und/oder den Akkuladezustand einer elektrischen Energieversorgungseinheit und/oder die Vollständigkeit der Werkzeuge, also den Werkzeugbestand, zu signalisieren. Eine solche Signaleinheit ist insbesondere an oder in einem Griffbereich oder einem Funktionsbereich am Gehäuse der Werkzeugbereitstellungsvorrichtung vorgesehen.

In der Ausführungsform ist das Signalelement, insbesondere die Leuchtdiode, mit einer Leiterplatte verbunden. Eine Fixierung erfolgt über eine Halterung die das Signalelement trägt und auf der Platine verschraubt ist. Die Halterung ist insbesondere zylinderförmig und gehäuseartig gestaltet. Bei einer Anordnung des Signalelements in einem Behältnis durchragt die Halterung den Werkzeugträger in dem Behältnis. Durch eine Öffnung im Werkzeugträger reicht der Halter mit dem integrierten Signalelement, vorzugsweise einer Leuchtdiode, bis zur Oberfläche des Werkzeugträgers. Auf diese Weise ist das Signalelement für den Anwender sehr gut wahrnehmbar. Eine Halterung mit einer integrierten Leuchtdiode wird auch als LED-Dom bezeichnet.

Ein weiterer Aspekt der Erfindung sieht vor, dass zumindest ein Tastschalter mit dem integrierten Tastelement dazu ausgelegt und eingerichtet ist, ein Steckelement eines Kabels, beispielsweise eines USB-Kabels, aufzunehmen. Hierfür weist der Tastschalter eine Stecköffnung auf. Das Tastelement ist so ausgelegt, dass es durch das Einführen des Steckelements betätigt wird. Beispielsweise weist das Tastelement eine entsprechend konfigurierte Schrägfläche auf, so dass das Tastelement beim Einstecken des Steckelements abwärts gedrückt und der Tastschalter- bzw. detektor ausgelöst wird. Auf diese Weise kann das Vorhandensein von elektrischen Kabeln, insbesondere Datenkommunikationskabeln, in der Werkzeugbereitstellungsvorrichtung überwacht und abgefragt werden. Vorzugsweise ist auch für solche Kabel eine Aufnahme im Werkzeugträger vorgesehen, wobei dieser Aufnahme ein entsprechend konfigurierter Detektor mit einem Tastschalter und dem Tastelement zugeordnet ist.

Eine Weiterbildung der erfindungsgemäßen Werkzeugbereitstellungsvorrichtung sieht vor, dass zumindest ein Behältnis, insbesondere eine Schublade, mit einem Wägesystem ausgerüstet ist. Das Wägesystem umfasst Wägezellen und ist dafür bestimmt und ausgelegt, das Gewicht der in einem Behältnis angeordneten Werkzeuge zu ermitteln. Das Wägesystem ist entsprechend mit der Funktionselektronik gekoppelt, die dazu eingerichtet ist, einen Abgleich vorzunehmen zwischen einem Ist-Gewicht und einem Soll-Gewicht der Werkzeuge in einem Behältnis. Auf diese Weise kann alternativ und/oder zusätzlich in zumindest einer Schublade eine Kontrolle der Bestückung mit Werkzeugen und deren Vollständigkeit über das Wägesystem vorgenommen werden. Hierzu wird das Ist-Gewicht des Werkzeugträgers mit einem vorgegebenen Soll-Gewicht eines vollständig mit Werkzeugen bestückten Werkzeugträgers über das Wägesystem verglichen und bei einer Abweichung eine Fehlermeldung zur Anzeige gebracht.

Die Wägeschublage bzw. das in der Schublade integriert Wägesystem und dessen Funktionselektronik ist mit der Datenverarbeitungseinheit und der Signaleinheit sowie den Signalelementen zur Visualisierung der Vollständigkeit der Bestückung einer Wägeschublade mit Werkzeugen gekoppelt. Insbesondere erfolgt dies über Signalelemente der Signaleinheit, die den jeweiligen Bestückungszustand als ordungsgemäß bzw. vollständig oder nicht ordnungsgemäß bzw. unvollständig zur Anzeige bringen. Vorzugsweise sind hierzu Signalelemente benachbart zur Schublade in einem am Gehäuse vorgesehenen Kantenschutzelement angeordnet.

Die Erfindung ist nachfolgend anhand von Zeichnungen näher beschrieben. Es zeigen:
- Figur 1: in perspektivischer Darstellungsweise einen Werkstattwagen;
- Figur 2: den Werkstattwagen mit einer ausgezogenen Schublade in einer Draufsicht;
- Figur 3: einen Blick in die mit Werkzeug bestückte Schublade;
- Figur 4: die Schublade ohne Werkzeuge mit einer Ansicht auf die Werkzeugaufnahmen;
- Figur 5: die Schublade entsprechend der Darstellung von Figur 4 in der Draufsicht;
- Figur 6: ein Schnitt durch die Darstellung der Figur 5 entlang der Linie A-A;
- Figur 7: einen vergrößerten Ausschnitt aus einer Werkzeugaufnahme;
- Figur 8: eine Ansicht auf einen Tastschalter;

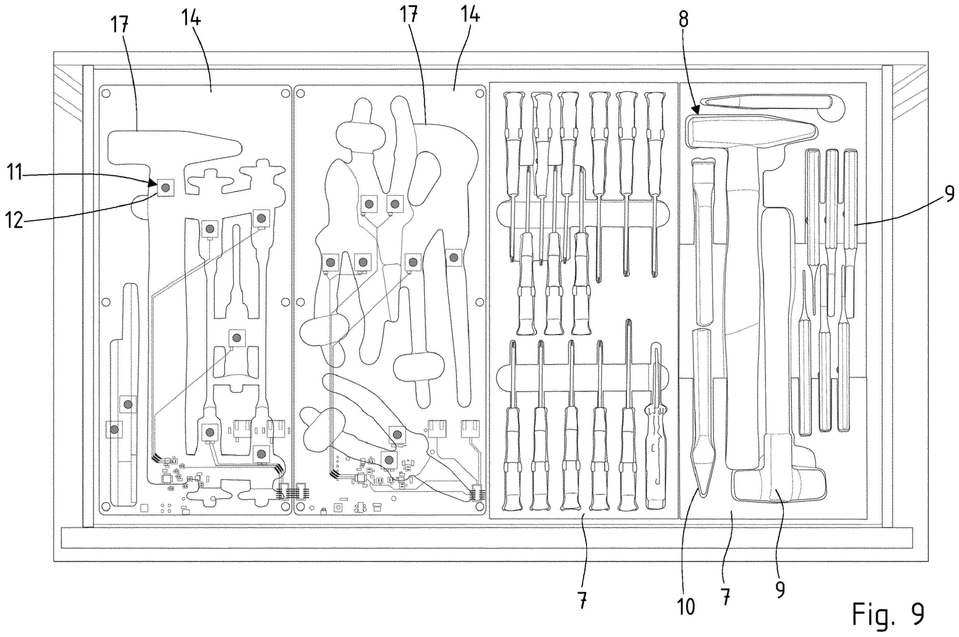

- Figur 9: eine Ansicht in die Werkzeugschublade mit einer Darstellung der Platinenbestückung in der linken Schubladenhälfte und eine mit Werkzeugen bestückte Werkzeugaufnahme in der rechten Schubladenhälfte;
- Figur 10: eine perspektivische Ansicht auf einen Werkzeugträger;

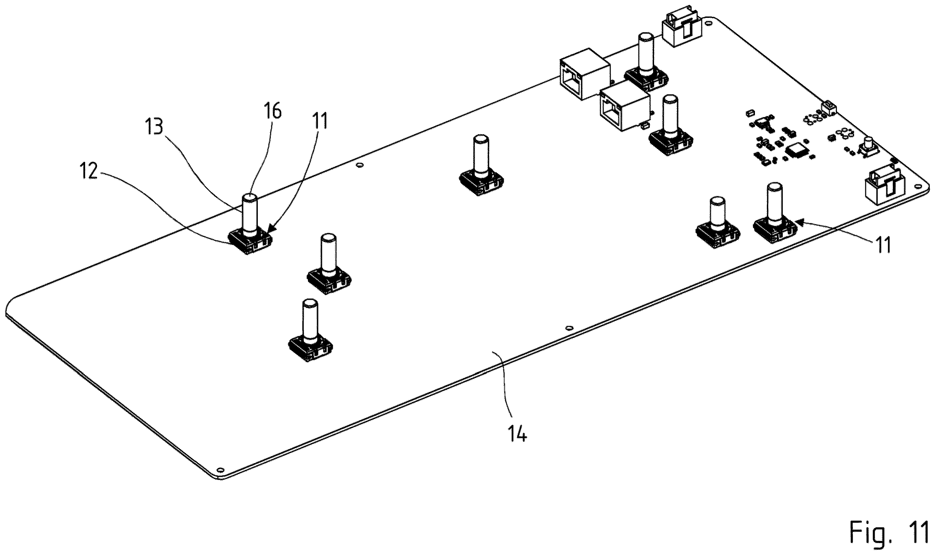

- Figur 11: eine perspektivische Darstellung einer mit Tastschaltern bestückten Leiterplatte nebst Anschlusskomponenten;
- Figur 12: in perspektivischer Darstellungsweise eine Ansicht auf eine weitere Ausgestaltung eines Tastschalters;
- Figur 13: eine perspektivische Darstellung auf einen Tragkörper mit mehreren in Reihe angeordneten Tastschaltern;
- Figur 14: die Darstellung gemäß der Figur 13 in der Draufsicht;
- Figur 15: in einer perspektivischen Ansicht mehrere jeweils in einer Reihe auf einer Leiterplatte angeordnete Tastschalter;
- Figur 16: die Darstellung entsprechend der Figur 15 in einer Draufsicht und
- Figur 17: eine schematische Stirnansicht auf einen Tragkörper mit eingelegtem Werkzeug;
- Figur 18: eine weitere Draufsicht auf eine Schublade mit dem Werkzeugträger ohne Werkzeuge;
- Figur 19: einen Schnitt durch die Darstellung der Figur 18 entlang der Linie A-A;
- Figur 20: eine perspektivische Darstellung eines teilweise mit Werkzeugen bestückten Werkzeugträgers;
- Figur 21: eine Draufsicht auf den Werkzeugträger entsprechend der Darstellung von Figur 20;
- Figur 22: einen Schnitt durch die Darstellung der Figur 21 entlang der Linie B-B;
- Figur 23: einen Haltekörper für ein optisches Signalelement in einer Perspektive;
- Figur 24: eine perspektivische Darstellung eines Halterbauteils mit integrierten Halterelementen;
- Figur 25: eine Ausführungsform eines Tastschalters in einer Perspektive;
- Figur 26: den Tastschalter gemäß der Figur 25 in einer Schnittdarstellung;
- Figur 27: eine perspektivische Darstellung eines Werkstattwagens mit geöffneter oberer Schublade;
- Figur 28: eine Draufsicht auf eine Leiterplatte mit montierten Tastelementen;
- Figur 29: einen Schnitt durch die Darstellung der Figur 28 entlang der Linie C-C;
- Figur 30: eine Draufsicht auf eine weitere Ausführungsform einer mit Tastschaltern bestückten Leiterplatte mit der Darstellung des Endes eines USB-Kabels;
- Figur 31: einen Schnitt durch die Leiterplatte entsprechend der Darstellung von Figur 30 entlang der Linie D-D mit nicht angekoppeltem USB-Stecker;
- Figur 32: einen Schnitt durch die Leiterplatte entsprechend der Figur 30 entlang dem Schnitt D-D mit der Darstellung eines gekoppelten USB-Steckers;
- Figur 33: eine weitere Ausführungsform eines Werkstattwagens in einer Perspektive;
- Figur 34: einen Ausschnitt aus dem Werkstattwagen gemäß der Darstellung von Figur 33 in einer Frontansicht,
- Figur 35: einen Ausschnitt aus dem Werkstattwagen entsprechend der Darstellung von Figur 33 in einer Perspektive;
- Figur 36: eine Draufsicht auf eine Schublade ohne Werkzeuge;
- Figur 37: einen Schnitt durch die Darstellung der Figur 36 entlang der Linie A-A;
- Figur 38: einen Schnitt durch die Darstellung der Figur 36 entlang der Linie D-D;
- Figur 39: eine Draufsicht auf einen Werkzeugträger;
- Figur 40: einen Schnitt durch den Werkzeugträger der Figur 39 entlang der Linie A-A und
- Figur 41: den Ausschnitt B aus der Figur 40 in vergrößerter Darstellung.

In den Figuren werden für gleiche oder funktionell einander entsprechende Bauteile bzw. Bauteilkomponenten der Werkzeugbereitstellungsvorrichtung sowie Teilen davon die gleichen Bezugszeichen verwendet, auch wenn aus Gründen der Vereinfachung auf eine wiederholte Beschreibung verzichtet wird.

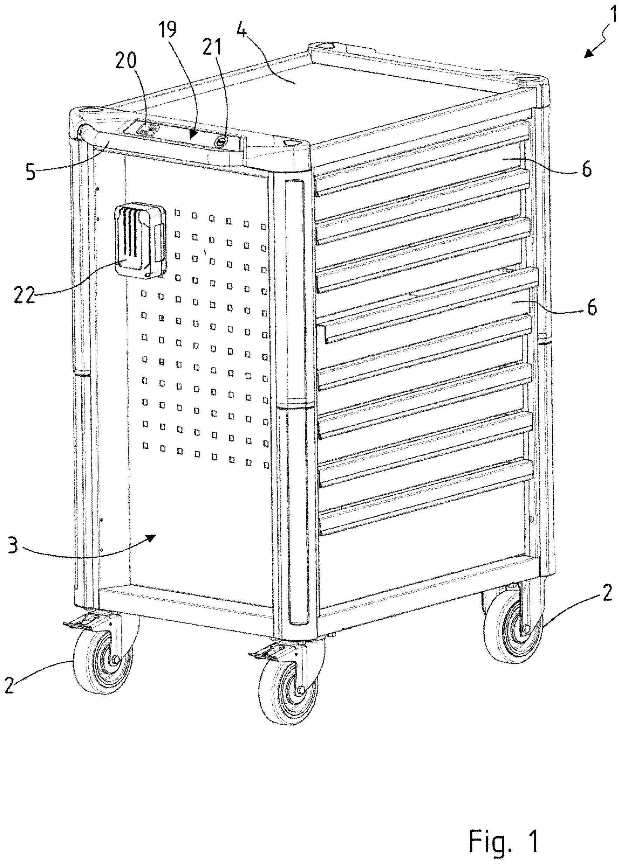

Die Figur 1 zeigt eine Werkzeugbereitstellungsvorrichtung in Form eines Werkstattwagens 1. Ein solcher Werkstattwagen 1 dient zur Aufnahme und Ablage von Werkzeugen, beispielsweise in Montage- oder Reparaturbetrieben der Land-, Luft- oder Wasserfahrzeugindustrie.

Der Werkstattwagen 1 weist ein auf Rollen 2 gelagertes schrank- bzw. gestellartiges Gehäuse 3 mit einer Deckelplatte 4 auf. An einer Schmalseite des im horizontalen Querschnitt rechteckigen Werkstattwagens 1 bzw. des Gehäuses 3 ist am Gehäuse ein Handgriff 5 vorgesehen. Das Gehäuse 3 bildet den tragenden Korpus des Werkstattwagens 1. Im Gehäuse 3 sind eine Anzahl von Behältnissen in Form von Schubladen 6 vertikal übereinander angeordnet. Die Schubladen 6 sind an im Gehäuse 3 an Schubladenträgern vorgesehenen Führungen verlagerbar. Jede Schublade 6 ist durch eine Verriegelung im Gehäuse 3 arretierbar.

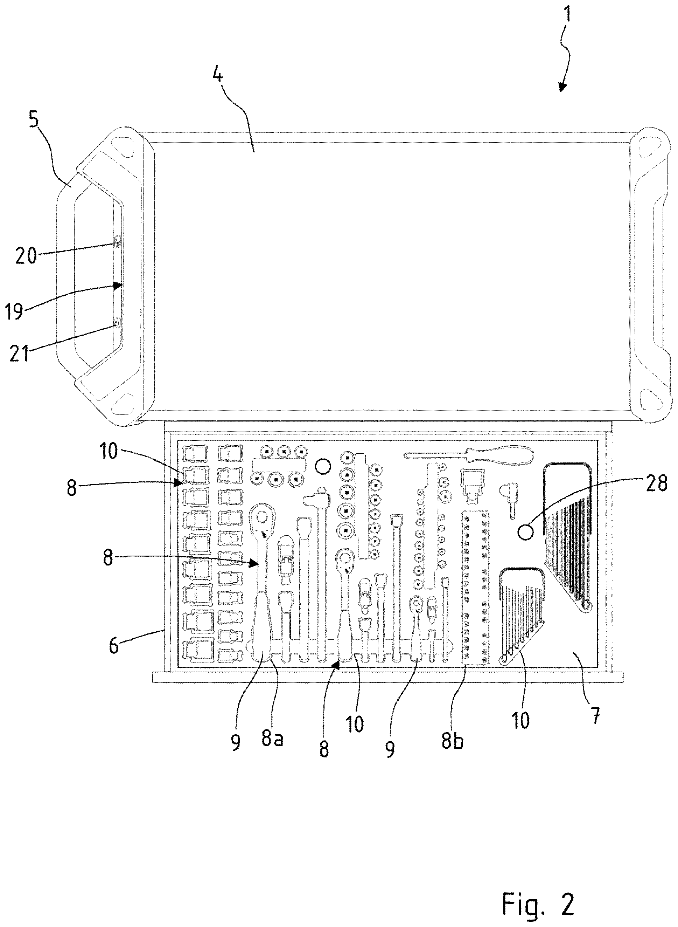

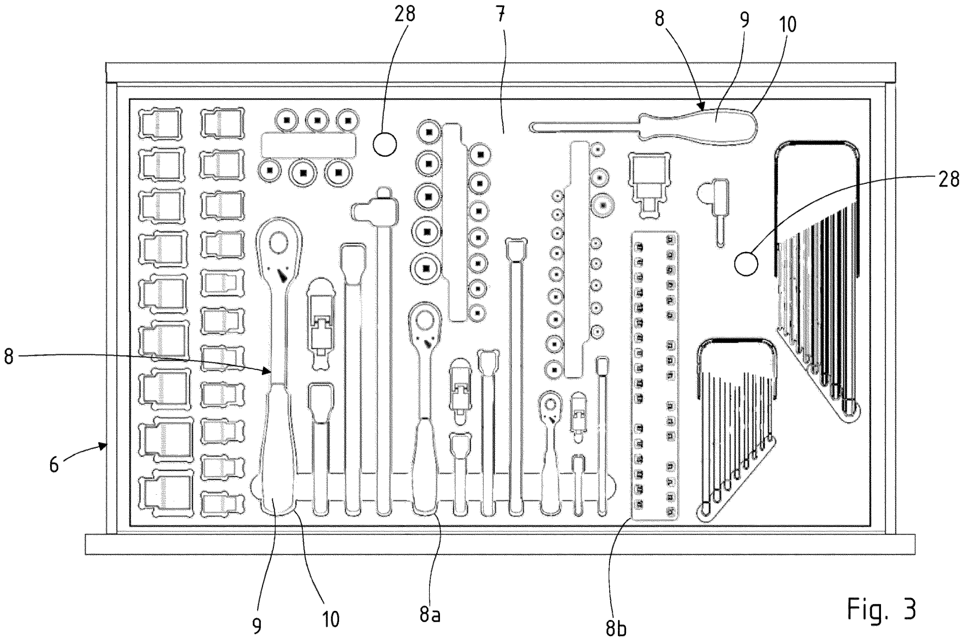

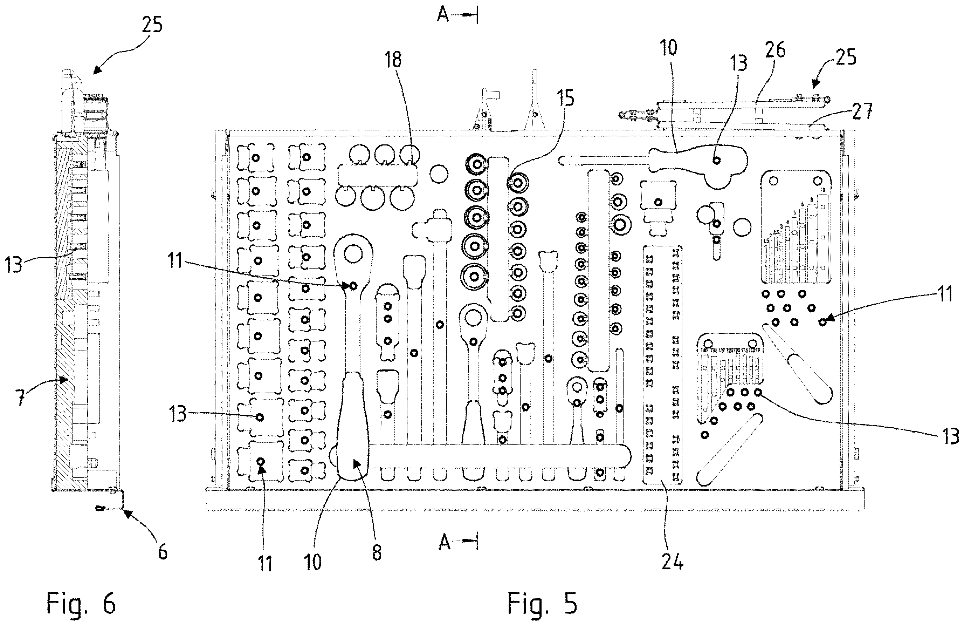

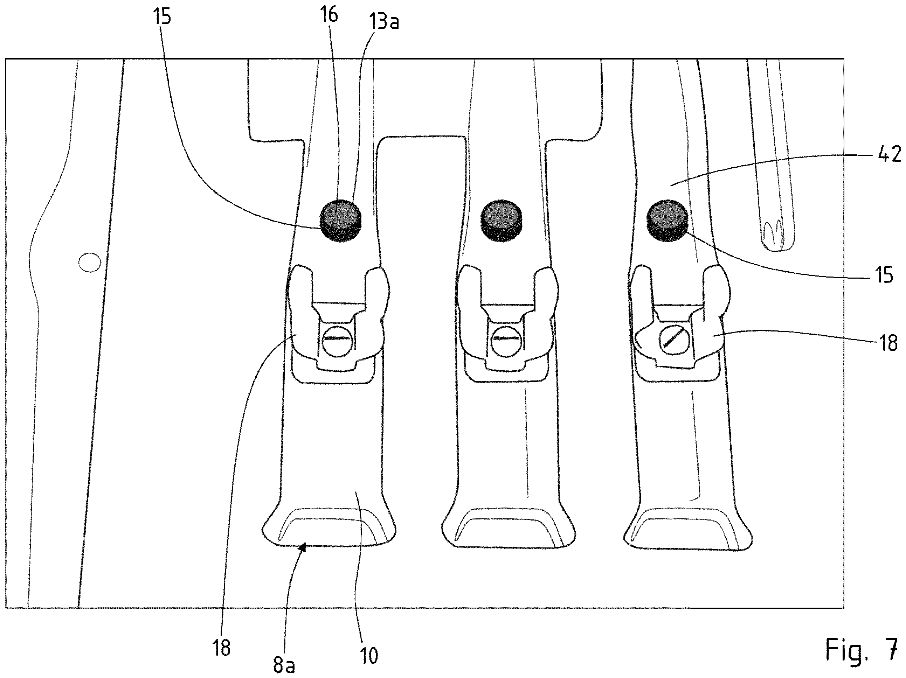

Der Werkstattwagen 1 mit einer aus dem Gehäuse 3 herausgezogenen Schublade 6 ist in der Figur 2 dargestellt. In der Schublade 6 ist ein Werkzeugträger 7 angeordnet. Der Werkzeugträger 7 ist durch eine Weichschaumeinlage gebildet. Im Werkzeugträger 7 sind Aufnahmen 8 für jeweils ein Werkzeug 9 vorgesehen (siehe hierzu auch Figur 3, Figur 4 bis 6 und Figur 10). Eine Aufnahme 8 weist eine an die Gestalt eines spezifischen Werkzeugs 9 angepasste Ausnehmung 10 im Werkzeugträger 7 auf. Möglich ist es auch, in der Schublade 6 mehrere Werkzeugträger 7 anzuordnen, welche sich ergänzen und den Boden der Schublade 6 abdecken. Diesbezüglich wird auch auf die Darstellung der Figur 7 verwiesen.

Der Werkstattwagen 1 ist mit einem Werkzeugidentifikations- und -verwaltungssystem ausgerüstet. Dieses ermöglicht, den Werkzeugbestand automatisiert zu überwachen und zu verwalten. Das Werkzeugidentifikations- und -verwaltungssystem weist eine Datenverwaltungseinheit auf nebst peripheren Geräten, welches Daten annimmt, verarbeitet und abgibt, also die notwendige Datenverarbeitung selbsttätig durchführt.

Die in den Schubladen 6 angeordneten Werkzeugträger 7 bestehen jeweils aus einer Weichschaumanlage und weisen eine Vielzahl von Aufnahmen 8 für unterschiedliche Werkzeuge 9 auf. Allgemein sind die Aufnahmen mit dem Bezugszeichen 8 versehen. Es gibt Aufnahmen 8a erster Art und Aufnahmen 8b zweiter Art. Die einzelnen Aufnahmen 8, 8a, 8b sind jeweils durch eine an die Gestalt eines spezifischen Werkzeugs 9 angepasste Ausnehmung 10 im Werkzeugträger 7 ausgebildet. Die Ausnehmungen 10 sind durch Vertiefungen in den Weichschaumeinlagen der Werkzeugträger 7 gebildet. Jede Aufnahme 8, 8a, 8b ist zumindest ein Detektor 11 zugeordnet, der das Vorhandensein eines Werkzeugs 9 in der Aufnahme 8, 8a, 8b erfasst.

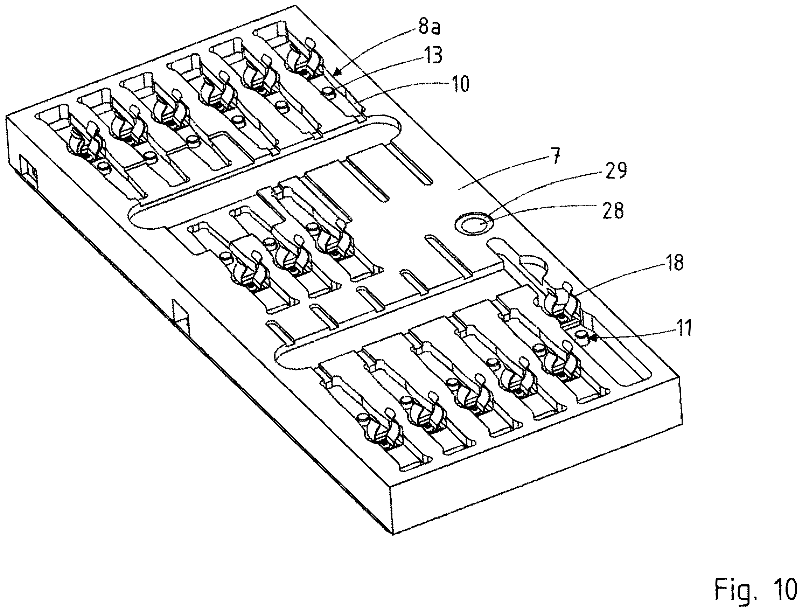

Der Detektor 11 weist einen Tastschalter 12 mit einem Tastelement 13 in Form eines federbelasteten Stößels 13a auf. Die Tastschalter 12 sind jeweils unterhalb der Aufnahmen 8, 8a, 8b auf einer Leiterplatte 14 befestigt (Figur 7 und Figur 10), welche auf dem Boden der Schubladen 6 unterhalb der Werkzeugträger 7 angeordnet sind. Auf diese Weise stützen sich die Tastschalter 12 mittelbar am Boden einer Schublade 6 ab. Das Tastelement 13 des Tastschalters 12 durchgreift eine Öffnung 15 im Werkzeugträger 7. Bei Aufnahmen 8a erster Art ist die Öffnung 15 ein die Wand des Werkzeugträgers 7 unterhalb einer Aufnahme 8a durchsetzender Durchbruch und im Querschnitt kreisförmig. Der Durchmesser der Öffnung 15 ist so bemessen, dass ein Tastelement 13 bzw. der Stößel 13a in der Öffnung 15 geführt ist und leicht hin und her bewegt werden kann. Der Stößel 13 weist eine Länge auf die größer als die Wandstärke des Werkzeugträgers 7 unterhalb der Aufnahme 8a ist, so dass der Stößel 13a mit einer Wirkfläche 16 durch den Boden 42 einer Aufnahme 8a in die Aufnahme 8a ragt. Die Wirkfläche 16 ist an der Stirnseite des Tastelements des Stößels ausgebildet bzw. durch die Stirnseite des Stößels 13a gebildet. Das Tastelement 13 bzw. der Stößel 13a steht mit seiner Stirnseite bzw. mit der Wirkfläche 16 gegenüber der Bodenfläche einer Ausnehmung 10 vor.

Jeder Werkzeugträger 7 weist mehrere Aufnahmen 8a und 8b auf, welche jeweils zumindest ein Detektor 11 zugeordnet ist. Alle Detektoren 11 sind in einer Horizontalebene angeordnet und bilden ein Tastenfeld. Die Leiterplatten 14 sind Träger für die Tastschalter 12 und dienen zu deren mechanischen Befestigung und zur elektrischen Verbindung. Hierfür sind die Leiterplatten 14 mit entsprechenden leitenden Verbindungen und Leiterbahnen ausgestattet.

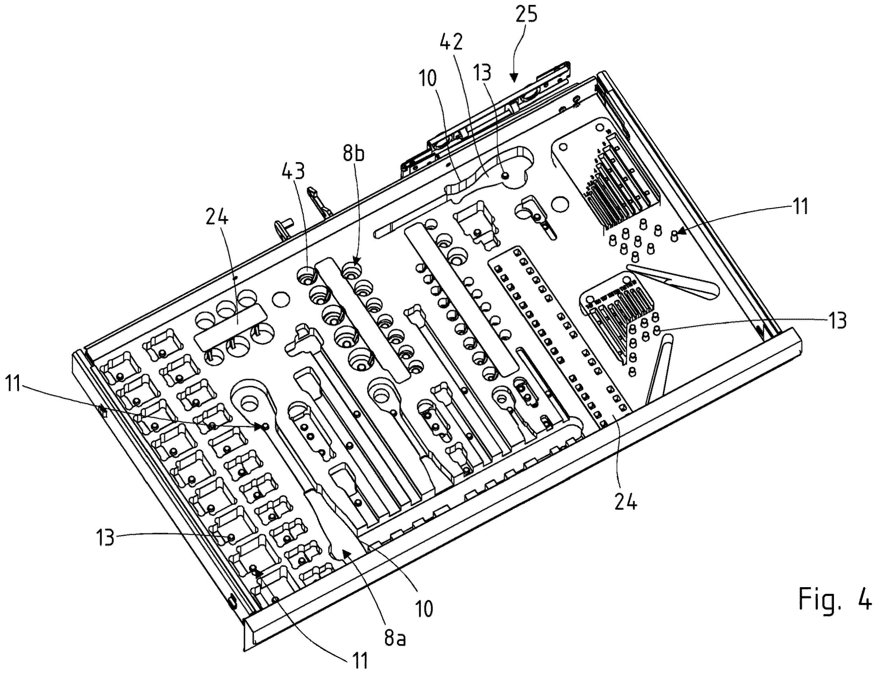

Zur Erleichterung der Zuordnung der Werkzeugträger 7 und zur Installation der Leiterplatten 14 in einer Schublade 6 sowie der Zuordnung der Werkzeugträger 7, sind auf den Leiterplatten 14 die Umrisse 17 der jeweiligen Werkzeuge 9 dargestellt. Dies erkennt man insbesondere in den Darstellungen der Figur 4 und 7. Weiterhin ist zu erkennen, dass auf dem Boden der Schublade 6 mehrere Leiterplatten 14 nebeneinander angeordnet sind. Jede Leiterplatte 14 weist ein auf die Abmessungen der Schublade 6 angepasstes Modulmaß auf, so dass die Leiterplatten 14 zusammen die Bodenfläche abdecken. Die einzelnen Leiterplatten 14 sind untereinander elektrisch leitend verbunden. Über Schnittstellen wird mittels elektrischer Verbindungsleitungen die Verbindung zur Datenverarbeitungseinheit hergestellt. Im Gehäuse 3 sind hierfür Kabeltragvorrichtungen 25 angeordnet für elektrische Verbindungsleitungen, insbesondere für die Verbindungsleitung zwischen den Leiterplatten 14 und der Datenverarbeitungseinheit. Eine Kabeltragvorrichtung 25 ist in den Figuren 4 bis 6 zu erkennen. Die Kabeltragvorrichtung 25 weist zwei klappgelenkig miteinander verbundene Tragarme 26, 27 auf. Über die Kabeltragvorrichtung 25 werden elektrische Verbindungsleitungen gehalten und geführt, so dass diese beim Ausziehen und Einschieben einer Schublade 6 der Bewegung störungsfrei folgen können.

Das Tastelement 13 der Tastschalter 12 stehen mit ihren Wirkflächen 16 gegenüber dem Boden 42 einer Ausnehmung 10 vor, so dass sie in eine Aufnahme 8a erster Art ragen. Durch ein in eine Aufnahme 8a eingelegtes Werkzeug 9 wird der Stößel 13a eines Tastschalters 12 abwärts gedrückt. Hierdurch wird ein Signal generiert und das Vorhandensein des Werkzeugs 9 in der jeweiligen Aufnahme 8a erster Art erkannt. Das Gewicht eines in der Aufnahme 8a befindlichen Werkzeugs 9 drückt den Stößel 13 des Tastschalters 12 herunter und aktiviert diesen. Bei Entnahme eines Werkzeugs 9 wird das Tastelement 13 entlastet. Die Verbindung am Tastschalter 12 wird unterbrochen. Durch dieses Signal wird erkannt, dass ein Werkzeug 9 aus einer Aufnahme 8 entnommen worden ist und fehlt. Die Tastschalter 12 werden folglich durch den unmittelbaren Kontakt des Tastelements 13 mit einem Werkzeug 9 aktiviert bzw. deaktiviert.

Bei leichteren Werkzeugen 9 sind in die Aufnahmen 8 Andruckverstärker in Form von Halterelementen 18. Halterelemente 18 können als klammerartige Halterelemente ausgeführt sein. Ein Halterelement 18 weist einen in einer Aufnahme 8 angeordneten Federclip mit Federschenkeln auf. Ein solches Halterelement 18 ist insbesondere in der Figur 7 zu erkennen. Ein Werkzeug 9 muss hierbei mittels eines bestimmten Kraftaufwandes zur Überwindung der Federkraft des Halterelements 18 in eine Aufnahme 8 eingelegt werden. Durch diesen Andruck wird der zugehörige Tastschalter 12 durch den Kontakt des Werkzeugs 9 betätigt. Das Halterelement 18 hält das Werkzeug 9 zuverlässig in der Aufnahme 8 und stellt sicher, dass der Tastschalter 12 in der Auslöseposition bleibt. Dies ist bei leichteren Werkzeugen 9 vorteilhaft, so dass diese auch bei einer Erschütterung, beispielsweise beim Transport des Werkstattwagens 1, in den Aufnahmen 8 gehalten werden.

Eine andere Ausführungsform eines Halterelements 18 ist magnetisch wirkend. Ein magnetisch wirkendes Magnethalterelement ist als Permanentmagnet ausgeführt und in, unterhalb oder seitlich einer Aufnahme 8 platziert. Durch die Magnetkraft des Magnethalterelements wird ein Werkzeug 9 in eine Aufnahme 8 gezogen und der Andruck gegen einen Tastschalter 12 verstärkt sowie das Werkzeug 9 in einer Aufnahme 8 fixiert.

Bei Aufnahmen 8a erster Art ist die Öffnung 15 ein die Wand des Werkzeugträgers 7 unterhalb einer Aufnahme 8a durchsetzender Durchbruch. Das Tastelement 13 des Tastschalters 2, welcher als Stößel 13a ausgeführt ist, durchgreift die Öffnung 15 von unten durch den Boden 42 der Aufnahme 8a und steht mit seiner stirnseitigen Wirkfläche 16 gegenüber der Bodenfläche einer Ausnehmung 10 vor und ragt in die Aufnahme 8a hinein.

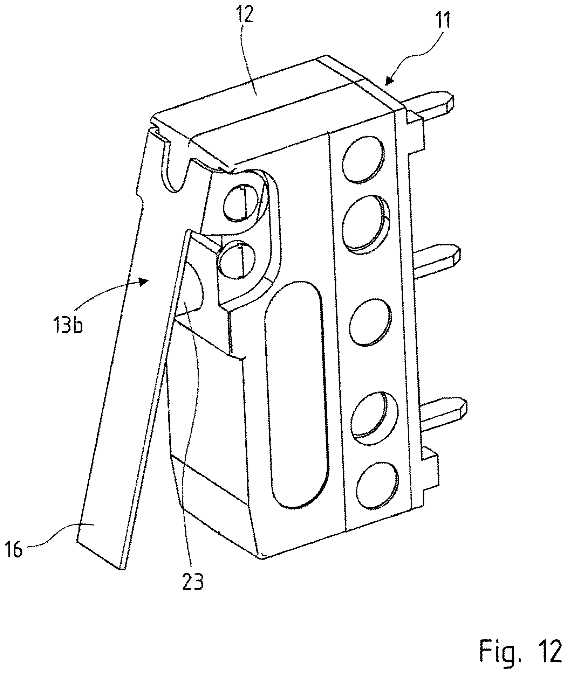

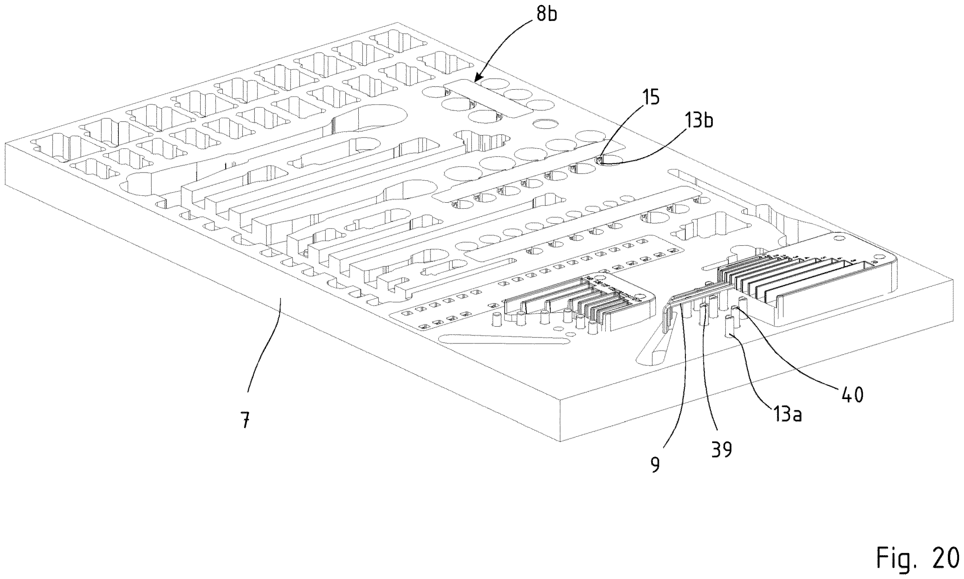

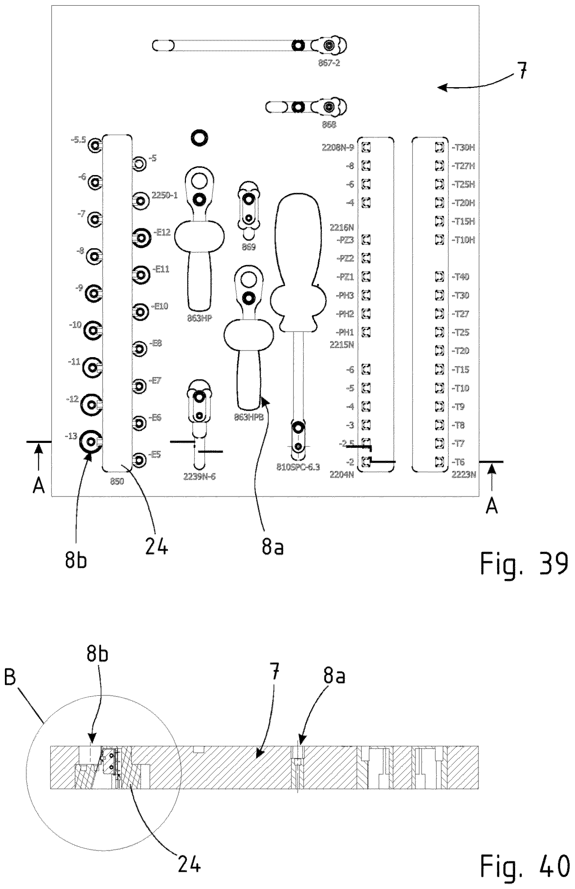

Des Weiteren gibt es Aufnahmen 8b zweiter Art (siehe hierzu auch Figur 20 und Figur 39). Bei Aufnahmen 8b zweiter Art ist die Öffnung 15 seitlich in einer Seitenwand 43 der Aufnahme 8b vorgesehen. Bei Aufnahmen 8b zweiter Art weist der Detektor 11 ein Tastelement 13 in Form eines Hebels 13b auf, welches die Öffnung 15 im Werkzeugträger 7 durchgreift, wobei die Öffnung 15 seitlich der Aufnahme 8b angeordnet ist. Eine solche Ausgestaltung eines Detektors 11 mit einem Tastschalter 12 und einem federbelasteten seitlich angeordneten Tastelement 13 zeigt die Figur 12. Ein solcher Taster 12 weist ein Tastelement 13 in Form eines gelenkig angeordneten Hebels 13boder Federschenkels auf. Das Tastelement 13 in Form des Hebels 13bwirkt mit einem federbelastenden Stift 23 des Tastschalters 12 zusammen. Für einen solchen Detektor 11 bzw. seitlich in die Aufnahme 8b ragenden Tastelement 13b ist die Öffnung 15 als Durchbruch gestaltet, welcher die Seitenwand 43 des Werkzeugträgers 7 seitlich der Aufnahme 8b durchsetzt.

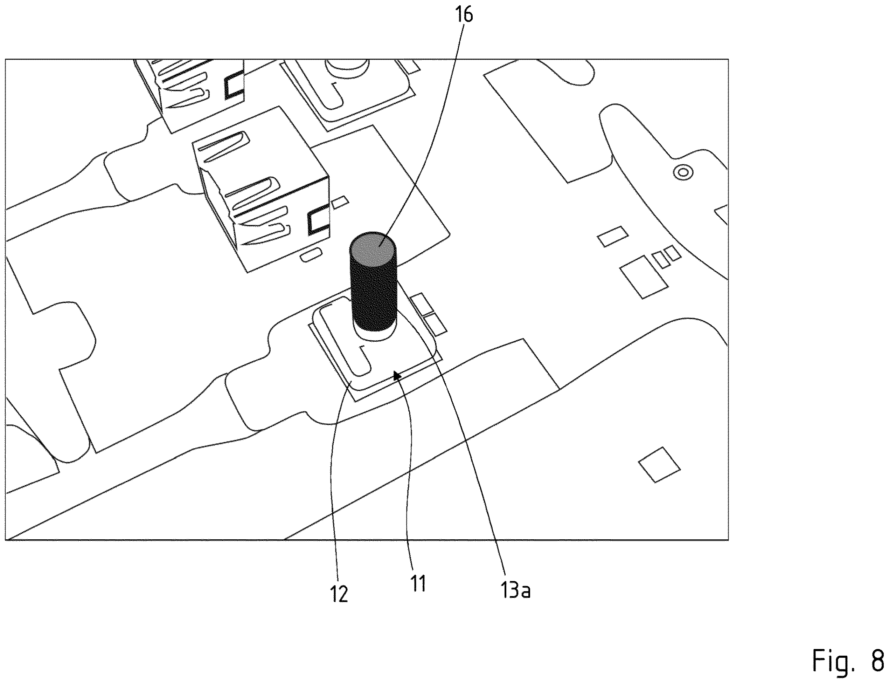

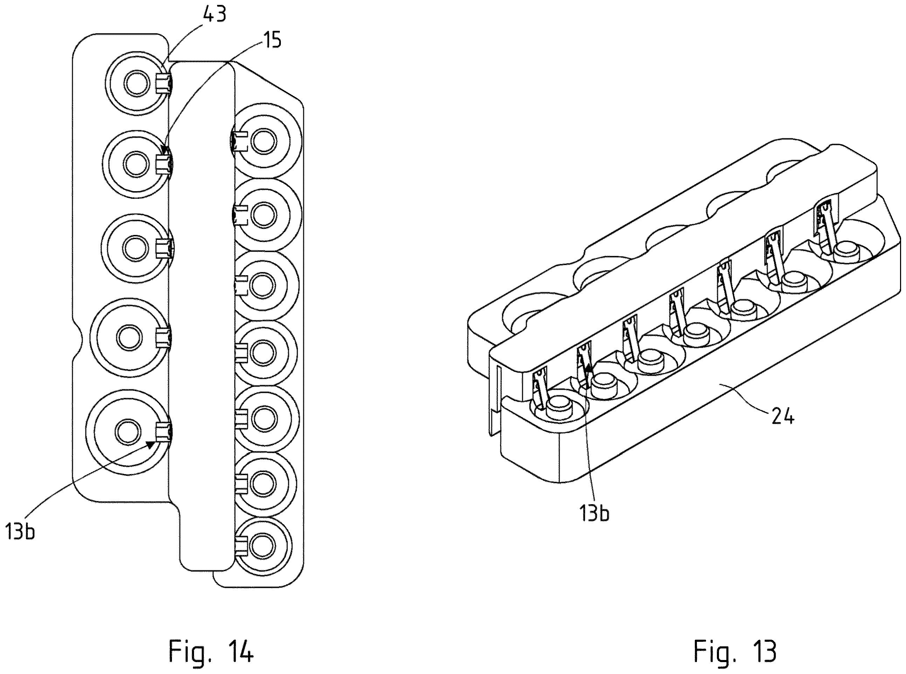

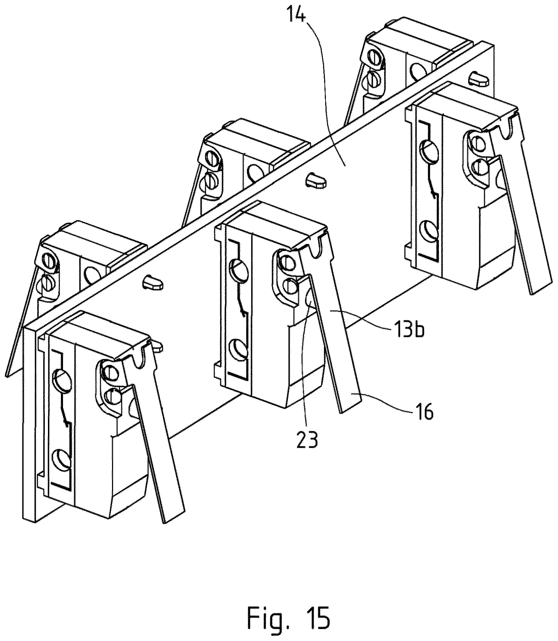

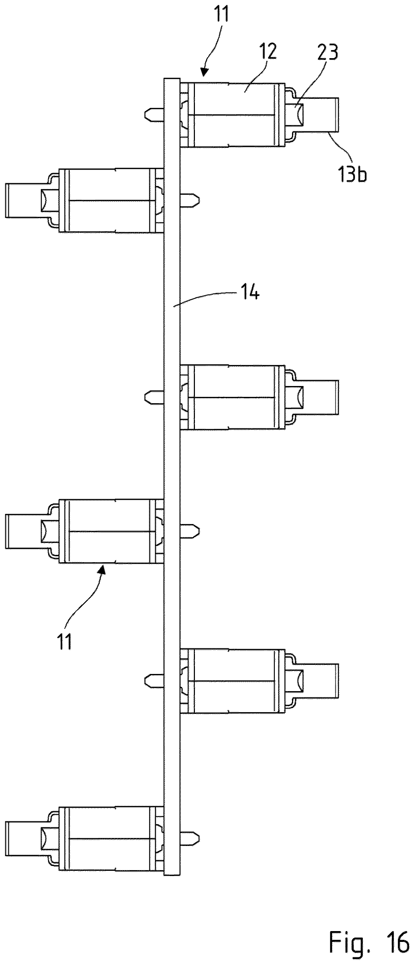

Mehrere Tastschalter 12 wie in der Figur 12 dargestellt, sind auch in den Figuren 13 bis 16 zu erkennen. Die Figuren 13 und 14 zeigen mehrere in einer Reihe angeordnete Tastschalter 12 die in einem Tragkörper 24 angeordnet sind bzw. in dem Tragkörper 24 aufgenommen sind. In den Figuren 13 und 14 erkennt man des Weiteren Tastschalter 12 mit Tastelementen 13 in Form von Stößeln 13a wie anhand der Figuren 7, 8, 10 und insbesondere 11 darstellt und beschrieben. Die Tastschalter 12 sind einer Leiterplatte 14 zugeordnet und in dem Tragkörper 24 platziert. Mit dem Tragkörper 24 werden die Tastschalter 12 in der Schublade 6 platziert und der Werkzeugträger 7 aufgelegt. Die Bauteile sind so arrangiert, dass die Tastschalter 12 mit den Tastelementen 13 in die Aufnahmen 8, 8a, 8b ragen.

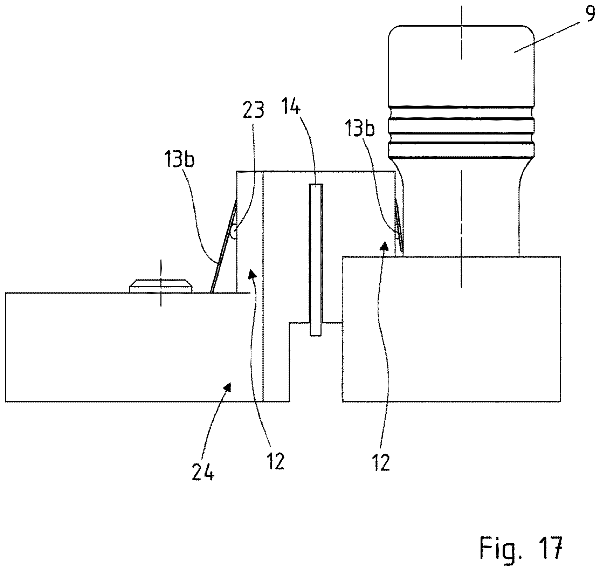

Eine solche Situation ist schematisch nochmals anhand der Figur 17 zu erkennen. Dort sind Tastschalter 12 mit Tastelementen 13 in Form von Hebeln 13b vorgesehen.

Dies erkennt man in der Darstellung der Figur 17 in der linken Bildebene. Die rechte Bildebene von Figur 17 zeigt ein in eine Aufnahme 8b eingesetztes Werkzeug 9. Durch das Werkzeug 9 sind die dort angeordneten Tastelemente 13 und die Tastschalter 12 aktiviert. Man erkennt in der rechten Bildhälfte von Figur 17 das, dass dort seitlich in eine Aufnahme 8b ragende Tastelement 13 in Form eines Hebels 13b eingedrückt ist. Das Tastelement 13 des Tastschalters 12 wird hierdurch betätigt und der Detektor 11 ist aktiviert. Damit wird ein Signal generiert und entsprechend verarbeitet. Das System erkennt, dass der Steckplatz belegt ist und das Werkzeug 9 vorhanden ist. Bei Entnahme bewegt sich das Tastelement 13, 13b am Tastschalter 12 wieder zurück und das Signal wird entsprechend negativ, was bedeutet, dass ein Werkzeug 9 fehlt.

Die Datenverarbeitungseinheit des Werkzeugidentifikations- und -verwaltungssystems des Werkstattwagens 1 empfängt die Signale von den Detektoren 11 und erkennt das Vorhandensein bzw. Nichtvorhandensein eines Werkzeugs 9 in einer Aufnahme 8 bzw. 8a, 8b. Mittels der Datenverarbeitungseinheit sind auch Werkzeugnutzungsdaten ebenso wie Werkzeugzustandsdaten und/oder Werkzeugbenutzerdaten erfassbar. Werkzeugbestand ebenso wie Informationen über Wartung und Beschaffenheit der Werkzeuge sowie der Benutzer werden erfasst und archiviert und können über ein mit der Datenverarbeitungseinheit drahtlos oder drahtgebunden kommunizierendes Display zur Anzeige gebracht werden.

Der Werkstattwagen 1 ist des Weiteren mit einem Verriegelungssystem ausgerüstet mittels dessen die Schubladen 6 im Gehäuse 3 zentral verriegelbar sind. Bestandteil der Datenverarbeitungseinheit ist eine Funktionselektronik, die mindestens einen Aktor ansteuert. Dieser dient insbesondere zum Betätigen einer Verriegelungsleiste des Verriegelungssystems. Ferner kann die Funktionselektronik ein Drahtloskommunikationsmodul aufweisen, insbesondere Bluetooth oder WLAN.

An der dem Handgriff 5 benachbarten Schmalseite des Werkstattwagens 1 ist geschützt durch den Handgriff 5 ein Funktionsbereich 19 vorgesehen. Dort ist eine Schnittstelle 20 für ein Identifikationselement, beispielsweise einen RFID-Sensor angeordnet, mittels dem das Verriegelungssystem des Werkstattwagens 1 geöffnet und verschlossen werden kann. Ferner ist dort eine Not-Entriegelung mit einem Zylinderschloss 21 angeordnet, über welches das Verriegelungssystem im Bedarfsfall manuell und mechanisch entriegelt werden kann.

Der Werkstattwagen 1 weist eine elektrische Energieversorgungseinheit 48 auf. Zu dieser gehört ein wiederaufladbarer Akkumulator 22, der auswechselbar an einer Gehäusewand des Werkstattwagens 1 angeordnet ist.

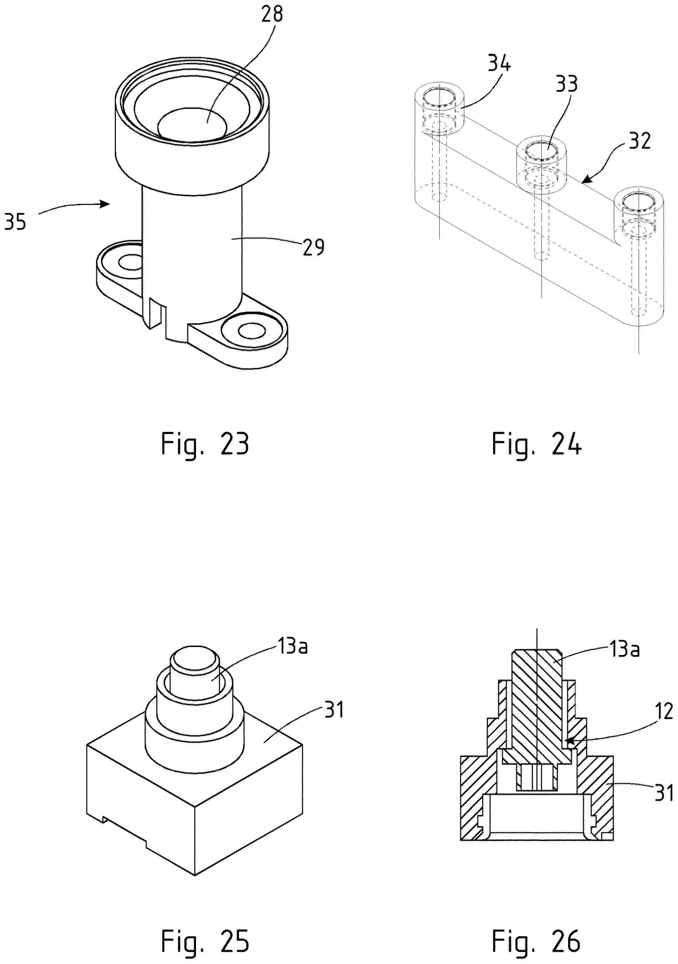

Der Werkstattwagen 1 ist mit einem oder mehreren Signalelementen 28 in Form von Leuchtdioden ausgerüstet. Ein solches optisches Signalelement 28 ist insbesondere in den Figuren 2, 3 und 10 dargestellt. Einen Halter 29 für ein Signalelement 28, der auf einer Leiterplatine 14 montierbar ist, zeigt die Darstellung der Figur 23. Ein solcher Halter 29 mit dem optischen Signalelement 28 in Form einer LED bildet einen sogenannten LED-Dom.

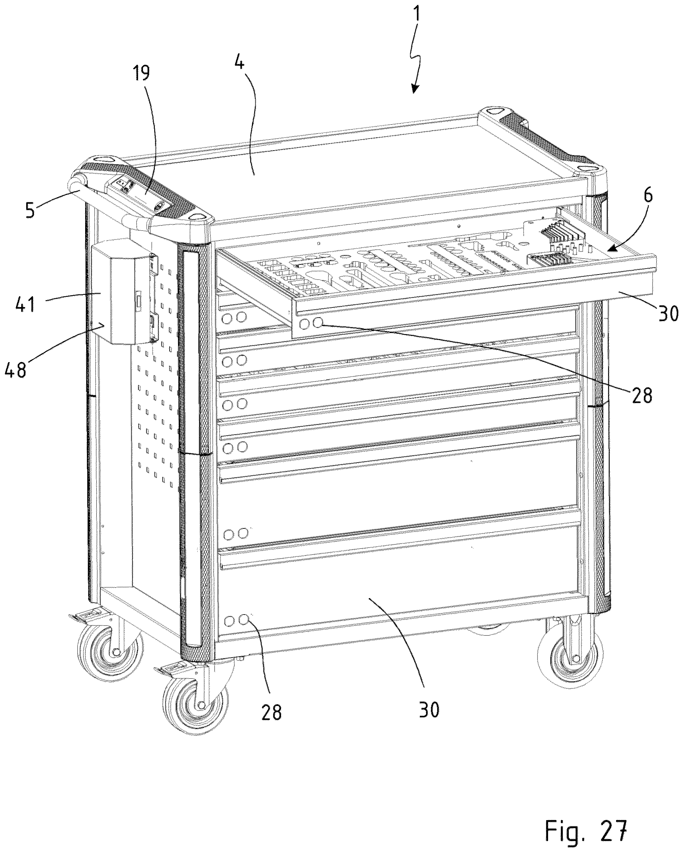

Bei dem Werkstattwagen 1 wie in der Figur 27 dargestellt, sind zusätzlich Signalelemente 28 an den Frontseiten 30 der Schubladen 6 vorgesehen.

Die Signalelemente 28 signalisieren das Vorhandensein oder das Fehlen eines Werkzeugs 9 in einer Schublade bzw. einer Aufnahme 8 in einem Werkzeugträger 7.

Möglich ist es auch Signalelemente 28 in Form von Kontrollleuchten an einem Display und insbesondere auch im Funktionsbereich 19 eines Werkstattwagens 1 anzuordnen.

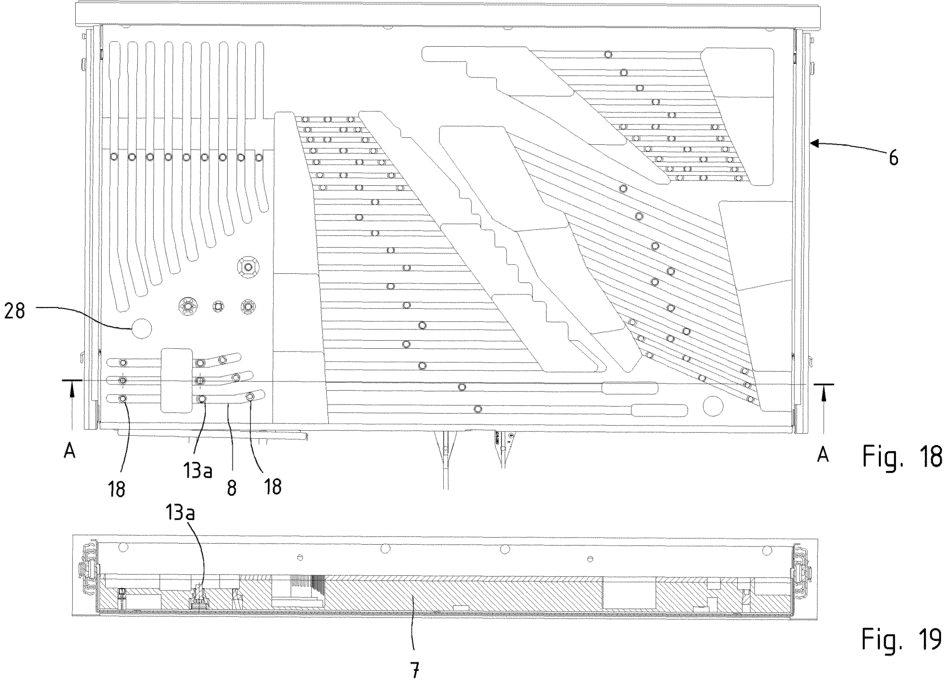

Die Figuren 18 und 19 zeigen eine weitere Ausgestaltung einer Schublade 6 mit integriertem Werkzeugträger 7, der durch eine Weichschaumeinlage gebildet ist. Im Werkzeugträger 7 sind Aufnahmen 8 jeweils für verschiedene Werkzeuge 9 vorgesehen. Eine Aufnahme 8 weist eine an die Gestalt eines spezifischen Werkzeugs 9 angepasste Ausnehmung 10 auf mit integrierten Detektoren 11 über die das Vorhandensein eines Werkzeugs 9 in der Aufnahme 8 erfasst wird.

Einen Detektor 11 mit Tastschalter 12 und einem Tastelement 13 zeigt auch nochmal die Darstellung der Figur 19. Das Tastelement 13 ist in einem Gehäuse 31 angeordnet, welches als Tragkörper für den Tastschalter 12 fungiert und insbesondere das Tastelement 13 führt, mechanisch schützt und dessen Beweglichkeit bzw. dessen Leichtgängigkeit sichert.

In verschiedenen Aufnahmen 8 sind Halterelemente 18 angeordnet in Form von magnetischen Halterelementen bzw. Magnethaltern. Die Magnethalter fungieren als Andruckverstärker innerhalb der Aufnahmen 8. Durch Magnetkraft werden Werkzeuge 9 aus ferromagnetischen Werkstoffen in die Aufnahme 8 gezogen und ein zugehöriger Tastschalter 12 durch den Kontakt mit den Werkzeugen 9 betätigt.

Einen in einem als Tragkörper fungierenden Gehäuse 31 angeordneten Tastschalter 12 mit Tastelement 13 zeigen die Darstellungen der Figuren 25 und 26.

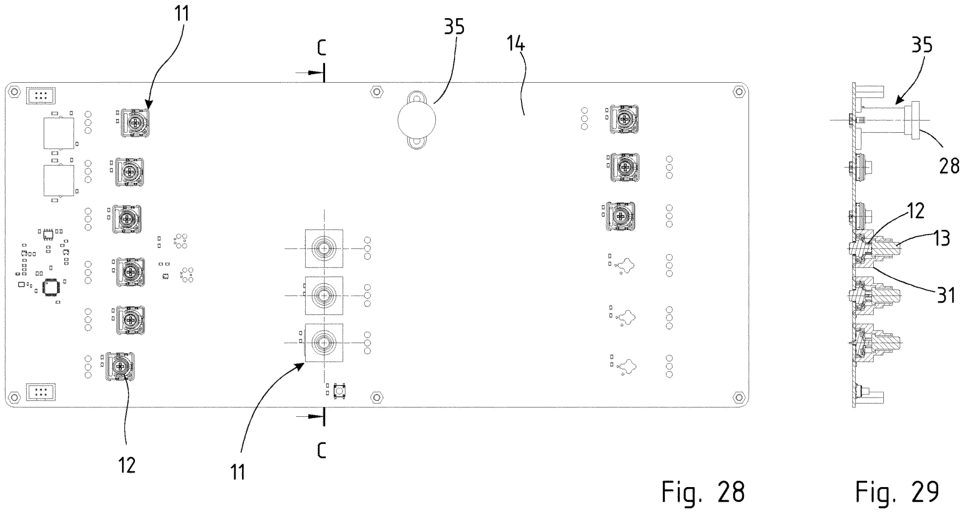

Eine Leiterplatine 14 bestückt mit in einem Gehäuse 31 integrierten Tastschaltern 12 und Tastelementen 13 zeigen auch die Darstellungen der Figuren 28 und 29. Dort ist auch LED-Dom 35 mit einem Signalelement 28 gehalten in einer Halterung 29 zu erkennen.

Eine besondere Ausgestaltung eines Halterelements 18 mit magnetischen Halterelementen zeigt die Darstellung der Figur 24. Dort sind in einem Halterkörper 32 in Reihe insgesamt drei Magnete 33 in Magnetaufnahmen 34 angeordnet.

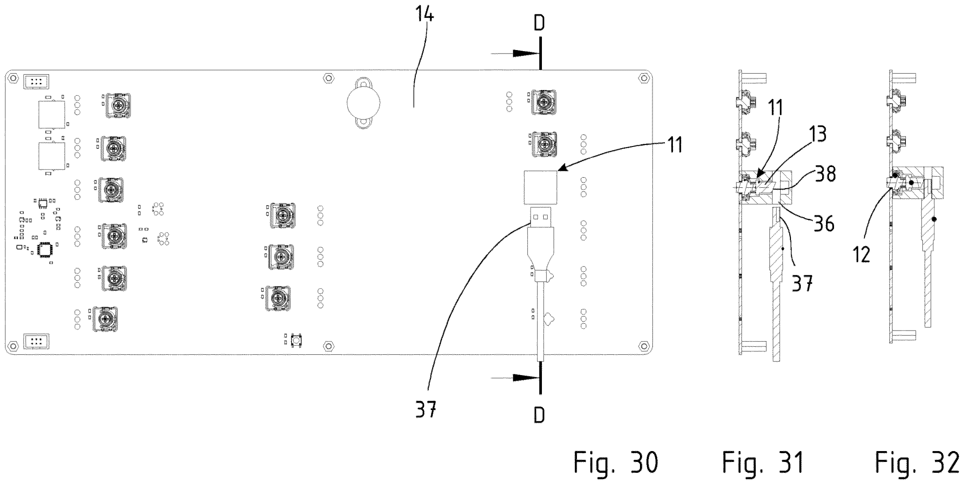

Anhand der Figuren 30 bis 32 ist eine besondere Ausgestaltung eines Detektors 11 erläutert. Der Detektor 11 weist eine elektrische Steckverbinderschnittstelle 36 zur Aufnahme eines elektrischen Steckelementes 37 auf. Bei dem Steckelement 37 handelt es sich um den USB-Stecker eines USB-Kabels.

Zur Erleichterung der Betätigung des Tastelements 13 weist dieses eine schräg ausgeführte Stirnfläche 38 auf. Beim Einführen des USB-Steckers gelangt dieser mit der Stirnfläche 38 in Kontakt und drückt das federbelastete Tastelement 13 des Tastschalters 12 nach unten und betätigt diesen.

Die Figur 31 zeigt die Anordnung vor dem Einführen des USB-Steckers in die Steckverbinderschnittstelle 36 des Tastschalters 12.

Die Figur 32 zeigt die Anordnung in die Steckverbinderschnittstelle 36 bei eingefügtem Steckelement 37.

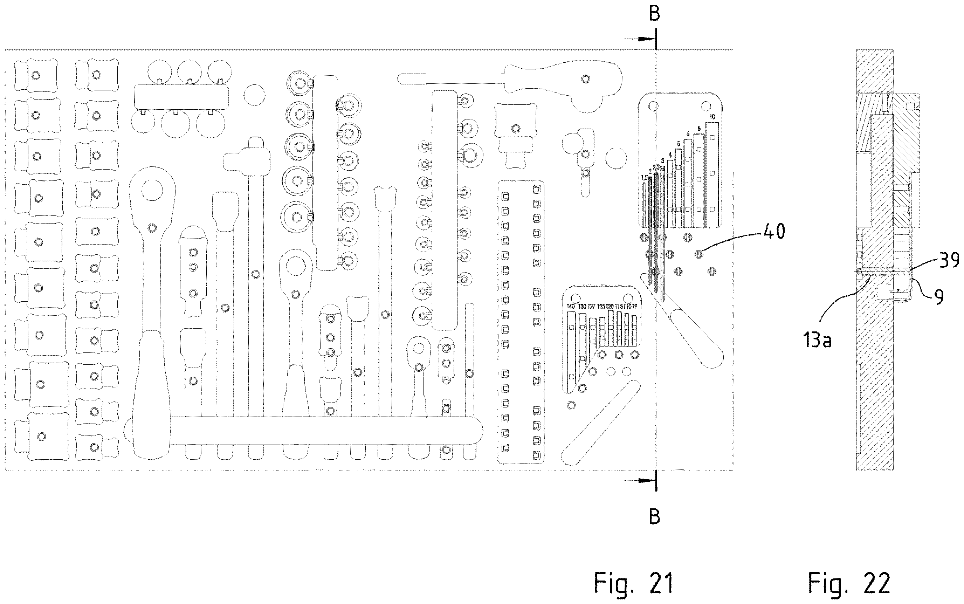

Anhand der Darstellungen der Figuren 20 bis 22 ist verdeutlicht, dass die Tastelemente 13 Stirnseiten 39 mit einer halbrunden Oberflächenkontur 40 aufweisen. Die Oberflächenkontur 40 ist an die Außenkontur eines Werkzeugs 9, im dargestellten Fall eines Winkelschraubendrehers, abgestimmt. Die auf die Werkzeuge 9 angepasste Oberflächenkontur 40 erleichtert das Ertasten der Lage der Werkzeuge 9.

In der Darstellung des Werkzeugwagens 1 gemäß der Figur 27 erkennt man des Weiteren ein Gehäuse 41, welches einen Akkumulator abdeckt und diesen schützt.

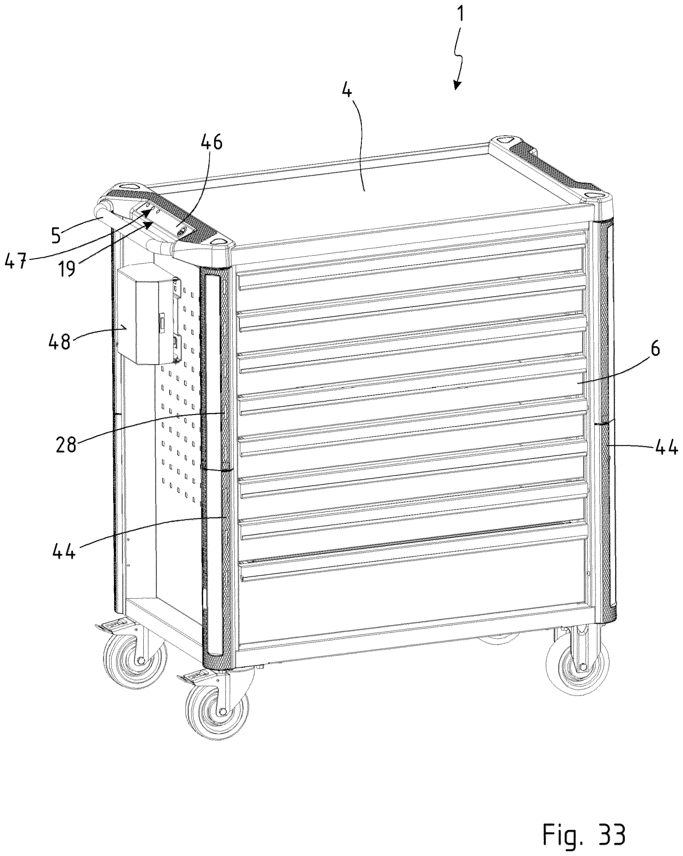

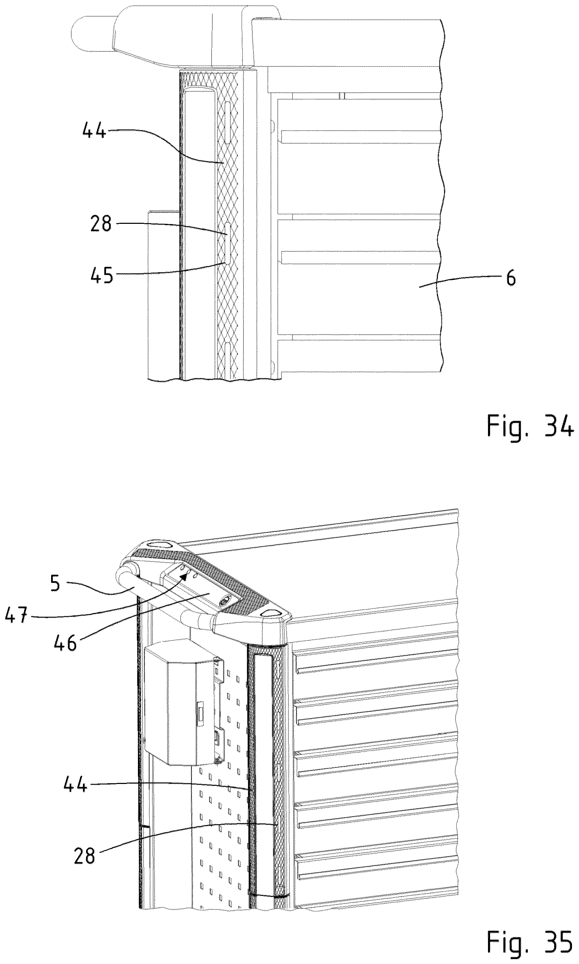

In der Figur 33 ist ein Werkstattwagen 1 im geschlossenen Zustand in einer Perspektive dargestellt. Die Figuren 34 und 35 zeigen Ausschnitte aus dem Werkstattwagen 1 gemäß der Darstellung von Figur 33.

Der Werkstattwagen 1 ist aufgebaut wie zuvor beschrieben. Auf die vorstehende Beschreibung wird Bezug genommen.

Bei dem Werkstattwagen 1 gemäß der Darstellung der Figuren 33 bis 34 ist ein Signalelement 28 in einem am Gehäuse 3 vorgesehenen Kantenschutzelement 44 angeordnet. Das Gehäuse 3 des Werkstoffwagens 1 ist an allen vier vertikalen Seitenkanten des Gehäuses 3 mit einem Kantenschutzelement 44 ausgerüstet. Die Kantenschutzelemente 44 fungieren als Prall- und Rammschutz und sind aus einem elastischen Kunststoffmaterial hergestellt. Die Kantenschutzelemente 44 haben primär Schutzfunktion. Bei dem Werkstattwagen 1 sind in dem in Bildebene linken Kantenschutzelement 44 an der vorderen Wagen- bzw. Gehäuseseite Signalelemente 28 angeordnet. Für die Aufnahme der Signalelemente 28 sind Aussparungen 45 im Kantenschutzelement 44 vorgesehen. Die Aussparungen 45 liegen mit ihrem oberen Ende im Wesentlichen auf gleicher Höhe wie die Oberkanten einer Schublade 6 und zwar in gleicher Höhe wie die Schubladengriffe.

Die Integration der Signalelemente 28 in das seitliche Kantenschutzelement 44 an der vorderen Gehäuseseite ist funktional vorteilhaft, weil die Signalelemente 28 jeweils benachbart zur Schubladenebene gut sichtbar sind und darüber hinaus auch durch das Kantenschutzelement 44 geschützt untergebracht sind.

Bei der Werkzeugbereitstellungsvorrichtung in Form des Werkstattwagens 1 ist ein Display 46 seitlich im Bereich der Deckelplatte 4 geschützt durch den Handgriff 5 angeordnet. Weiterhin ist eine Signaleinheit 47 vorgesehen, welche dazu eingerichtet und bestimmt ist, den Schließzustand des Werkstattwagens 1 und den Akkuladezustand einer elektrischen Energieversorgungseinheit 48, insbesondere eins Akkumulators und/oder die Vollständigkeit des Werkzeugbestands in dem Werkstattwagen 1 zu signalisieren.

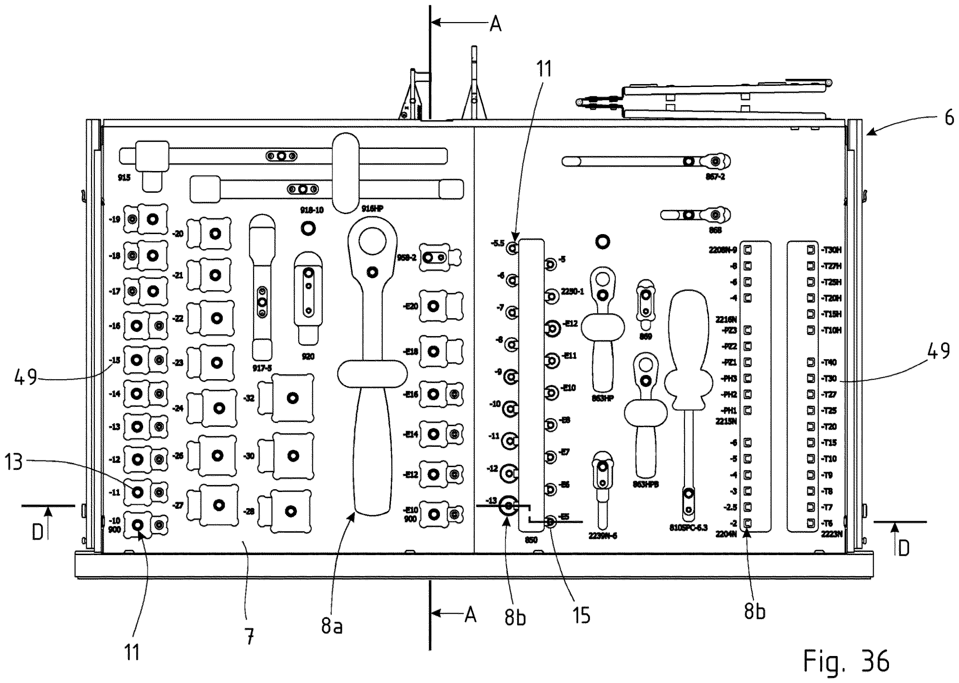

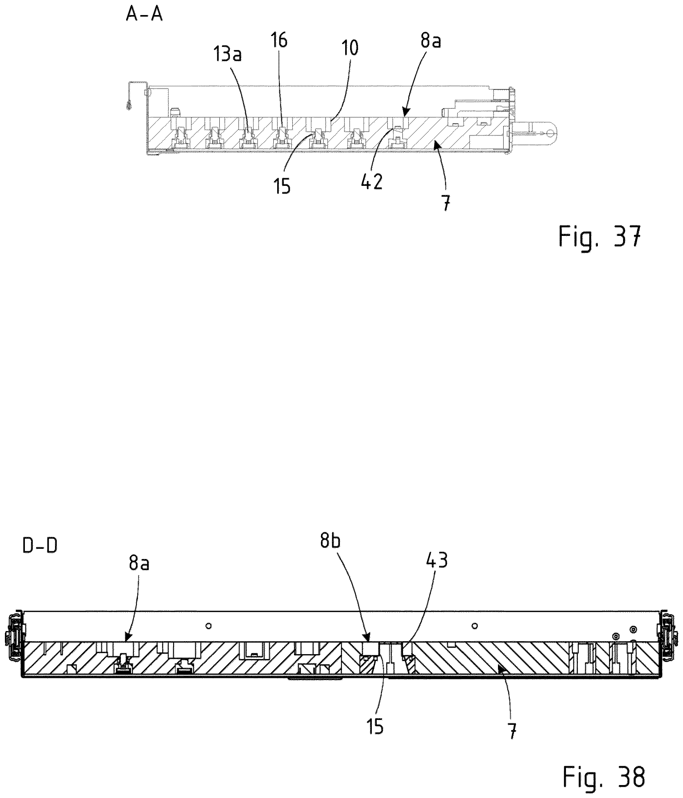

In den Figuren 36 bis 38 ist nochmals eine Schublade 6 mit integriertem Werkzeugträger 7 in einer Draufsicht bzw. in Schnittdarstellungen entsprechend denjenigen A-A und D-D dargestellt. Die Ausgestaltung entspricht der zuvor erläuterten Art. Auf die entsprechenden Ausführungen und Bauteilbenennungen wird verwiesen. Die Figur 37 zeigt einen Werkzeugträger 7, gebildet aus einer Weichschaumeinlage, mit Aufnahmen 8a erster Art. Im Werkzeugträger 7 sind an die Gestalt eines spezifischen Werkzeugs 9 angepasste Ausnehmungen 10 ausgebildet. Bei den Aufnahmen 8a erster Art ist die Öffnung 15 ein die Wand des Werkzeugträgers 7 unterhalb einer Aufnahme 8a durchsetzender Durchbruch. Das Tastelement 13 mit seinem Stößel 13a ist durch den Boden 42 der Aufnahme 8a geführt und ragt mit seiner Wirkfläche 16 in die Aufnahme 8a hinein.

In der Schnittdarstellung von Figur 38 sind Aufnahmen 8a erster Art und Aufnahmen 8b zweiter Art zu erkennen.

Bei der Draufsicht auf die Schublade 6 und dem darin aufgenommenen Werkzeugträger 7 gemäß der Figur 36 ist zu erkennen, dass die einzelnen Aufnahmen 8, 8a, 8b mit individuellen Identifikationsmerkmalen 49 in Form einer Beschriftung versehen sind. Dies ist auch anhand der Figur 39 verdeutlicht.

Die Figur 39 zeigt nochmals einen Werkzeugträger 7 mit Aufnahmen 8a erster Art und Aufnahmen 8b zweiter Art.

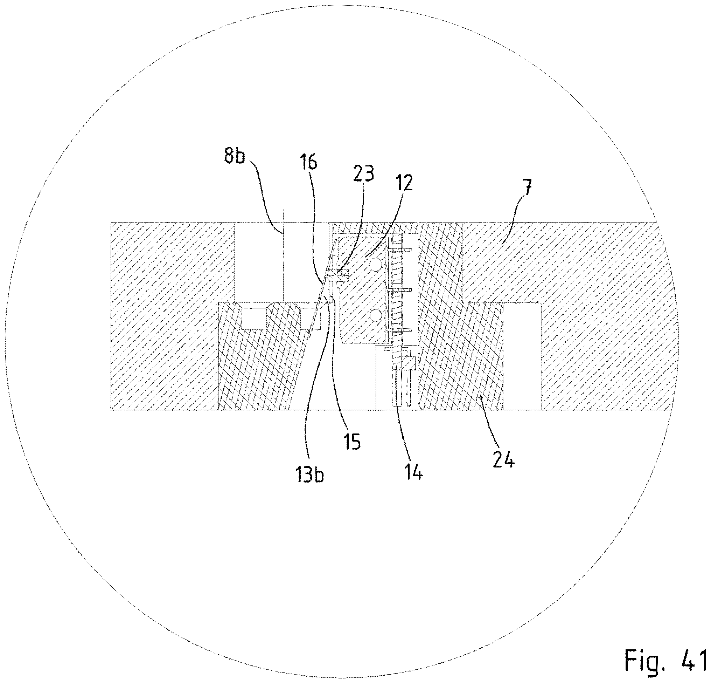

Die Figur 40 zeigt einen Schnitt durch die Darstellung der Figur 39 entlang der Linie A-A. Anhand der vergrößerten Darstellung in Figur 41 ist nochmals eine Aufnahme 8b zweiter Art erläutert.

Bei den Aufnahmen 8b zweiter Art ist die Öffnung 15 seitlich der Aufnahme 8b in deren Seitenwand 43 angeordnet. Bei den Aufnahmen 8b zweiter Art weist ein Detektor 11 einen Tastschalter 12 mit einem federbelasteten seitlichen Tastelement 13 in Form eines Hebels 13b auf. Der Hebel 13b durchgreift die Öffnung 15 und ragt seitlich in die Aufnahme 8b hinein.

Der Tastschalter 12 ist auf einer vertikal orientierten Leiterplatte 14 angeordnet. Diese ist durch einen Tragkörper 24 gehalten. Der Tragkörper 24 zählt zum Werkzeugträger 7 bzw. ergänzt den Werkzeugträger 7. Das Tastelement 13 in Form des federbelasteten Hebels 13b ragt durch die seitliche Öffnung 15. Der Hebel 13b steht seitlich mit seiner Wirkfläche 16 gegenüber der Öffnung 15 vor und ragt in die Aufnahme 8b hinein. Der Hebel 13 ist am Tastschalter 12 gelenkig angeordnet und stützt sich über den federbelasteten Stift 23 am Tastschalter ab. Durch Einsetzen eines Werkzeugs 9 in die Aufnahme 8b wird das Tastelement 13 in Form des Hebels 13b seitlich in Richtung zum Tastschalter 12 gedrückt. Die Bewegung des Hebels 13b wird über den Stift 23 auf den Tastschalter 12 übertragen. Hierbei wird ein Signal generiert und das Vorhandensein des Werkzeugs 9 in der Aufnahme 8b zweiter Art detektiert.

### Bezugszeichen:

- 1 -: Werkstattwagen
- 2 -: Rollen
- 3 -: Gehäuse
- 4 -: Deckelplatte
- 5 -: Handgriff
- 6 -: Behältnis
- 7 -: Werkzeugträger
- 8 -: Aufnahme
- 8a -: Aufnahme erster Art
- 8b -: Aufnahme zweiter Art
- 9 -: Werkzeug
- 10-: Ausnehmung
- 11 -: Detektor
- 12 -: Tastschalter
- 13 -: Tastelement
- 13a -: Stößel
- 13b -: Hebel
- 14 -: Leiterplatte
- 15 -: Öffnung
- 16 -: Wirkfläche
- 17 -: Umriss
- 18 -: Halterelement
- 19 -: Funktionsbereich
- 20 -: Schnittstelle
- 21 -: Zylinderschloss
- 22 -: Akkumulator
- 23 -: Stift
- 24 -: Tragkörper
- 25 -: Kabeltragvorrichtung
- 26 -: Tragarm
- 27 -: Tragarm
- 28 -: Signalelement
- 29 -: Halter
- 30 -: Frontseite
- 31 -: Gehäuse
- 32 -: Halterkörper
- 33 -: Magnet
- 34 -: Magnetaufnahme
- 35 -: LED-Dom
- 36 -: Steckverbinderschnittstelle
- 37 -: Steckelement
- 38 -: Stirnfläche
- 39 -: Stirnseite
- 40 -: Oberflächenkontur
- 41 -: Gehäuse für 22
- 42 -: Boden von 8, 8a
- 43 -: Seitenwand 8, 8b
- 44 -: Kantenschutzelement
- 45 -: Aussparung
- 46 -: Display
- 47 -: Signaleinheit
- 48 -: Energieversorgungseinheit
- 49 -: Identifikationsmerkmal

## Patentansprüche

1. Werkzeugbereitstellungsvorrichtung, insbesondere Werkstattwagen, Werkbank oder Werkzeugschrank, welche ein Gehäuse (3) und darin angeordneten Behältnissen (6), insbesondere Schubladen, aufweist, wobei in einem Behältnis (6) zumindest ein Werkzeugträger (7) vorgesehen ist, der mehrere Aufnahmen (8) für Werkzeuge (9) aufweist und den Aufnahmen (8; 8a, 8b) jeweils ein Detektor (11) zugeordnet ist zur Detektion des Vorhandenseins eines Werkzeugs (9) in der Aufnahme (8; 8a, 8b), wobei der Detektor (11) einen Tastschalter (12) mit einem Tastelement (13, 13a, 13b) aufweist, wobei das Tastelement (13, 13a, 13b) eine Öffnung (15) im Werkzeugträger (7) durchgreift und mit einer Wirkfläche (16) in die Aufnahme (8; 8a, 8b) ragt, wobei bei zumindest einer Aufnahme (8a) erster Art die Öffnung (15) ein die Wand des Werkzeugträgers (7) unterhalb der Aufnahme (8a) durchsetzender Durchbruch ist und das Tastelement (13, 13a) von unten durch den Boden (42) einer Aufnahme (8a) erster Art ragt und wobei in zumindest einer Aufnahme (8; 8a, 8b) ein Halterelement (18) angeordnet ist, welches als Andruckverstärker für ein Werkzeug (7) fungiert, **dadurch gekennzeichnet, dass** bei zumindest einer Aufnahme (8b) zweiter Art das Tastelement (13, 13b) seitlich in die Aufnahme (8b) zweiter Art ragt.

2. Werkzeugbereitstellungsvorrichtung nach Anspruch 1, **dadurch gekennzeichnet, dass** das Tastelement (13) einen Stößel (13a), insbesondere ein federbelasteter Stößel, ein Schenkel, insbesondere ein Federschenkel oder ein Hebel (13b), insbesondere ein Federhebel ist.

3. Werkzeugbereitstellungsvorrichtung nach Anspruch 1 oder 2, **dadurch gekennzeichnet, dass** der Tastschalter (12) in einem Tragkörper (24) angeordnet ist.

4. Werkzeugbereitstellungsvorrichtung nach einem der Ansprüche 1 bis 3, **dadurch gekennzeichnet, dass** sich der Tastschalter (12) oder ein den Tastschalter (12) aufnehmender Tragkörper (24) zumindest mittelbar am Boden des Behältnisses (6) abstützt.

5. Werkzeugbereitstellungsvorrichtung nach einem der Ansprüche 1 bis 4, **dadurch gekennzeichnet, dass** der Tastschalter (12) auf einer Leiterplatte (14) befestigt ist, welche auf dem Boden des Behältnisses (6) unterhalb des Werkzeugträgers (7) angeordnet ist.

6. Werkzeugbereitstellungsvorrichtung nach einem der Ansprüche 1 bis 5, **dadurch gekennzeichnet, dass** jeder Aufnahme (8) ein Detektor (11) zugeordnet ist, wobei alle Detektoren (11) in einer Horizontalebene angeordnet sind.

7. Werkzeugbereitstellungsvorrichtung nach einem der Ansprüche 1 bis 6, **dadurch gekennzeichnet, dass** eine Aufnahme (8) eine an die Gestalt eines spezifischen Werkzeugs angepasste Ausnehmung (10) im Werkzeugträger (7) aufweist.

8. Werkzeugbereitstellungsvorrichtung nach einem der Ansprüche 1 bis 7, **dadurch gekennzeichnet, dass** das Halterelement (18) ein klammerförmiges Halterelement oder ein Magnethalter ist.

9. Werkzeugbereitstellungsvorrichtung nach einem der Ansprüche 1 bis 8, **dadurch gekennzeichnet, dass** eine Datenverarbeitungseinheit vorgesehen ist, die dazu bestimmt und ausgelegt ist, Signale von dem bzw. den Detektoren (11) zu Empfangen und eine Entnahme und Rückgabe eines Werkzeugs aufzuzeichnen und zu dokumentieren.

10. Werkzeugbereitstellungsvorrichtung nach Anspruch 9, **dadurch gekennzeichnet, dass** mittels der Datenverarbeitungseinheit Werkzeugnutzungsdaten und/oder Werkzeugzustandsdaten und/oder Werkzeugbenutzerdaten erfassbar sind.

11. Werkzeugbereitstellungsvorrichtung nach einem der Ansprüche 1 bis 10, **dadurch gekennzeichnet, dass** der Werkzeugträger (7) durch eine Weichschaumeinlage gebildet ist.

12. Werkzeugbereitstellungsvorrichtung nach einem der Ansprüche 5 bis 11, **dadurch gekennzeichnet, dass** auf der Leiterplatte (14) der Umriss (17) eines oder mehrerer Werkzeuge (9) dargestellt ist.

13. Werkzeugbereitstellungsvorrichtung nach einem der Ansprüche 5 bis 12, **dadurch gekennzeichnet, dass** auf dem Boden des Behältnisses (6) mehrere Leiterplatten (14) nebeneinander angeordnet sind.

14. Werkzeugbereitstellungsvorrichtung nach Anspruch 13, **dadurch gekennzeichnet, dass** jede Leiterplatte (14) ein auf die Abmessungen des Behältnisses (6) angepasstes Modulmaß besitzt, so dass die Leiterplatten (14) zusammen die Bodenfläche abdecken.

15. Werkzeugbereitstellungsvorrichtung nach einem der Ansprüche 1 bis 14, **dadurch gekennzeichnet, dass** im Gehäuse (3) mindestens eine Kabeltragvorrichtung (25) angeordnet ist für elektrische Verbindungsleitungen, insbesondere für elektrische Verbindungsleitungen zwischen Leiterplatten (14) in einem Behältnis (6) und/oder zwischen Leiterplatten (14) und einer Datenverarbeitungseinheit.

16. Werkzeugbereitstellungsvorrichtung nach einem der Ansprüche 1 bis 15, **dadurch gekennzeichnet, dass** ein Verriegelungssystem vorgesehen ist mittels dessen die Behältnisse (6) im Gehäuse (3) zentral verriegelbar sind.

17. Werkzeugbereitstellungsvorrichtung nach einem der Ansprüche 1 bis 16, **dadurch gekennzeichnet, dass** eine Funktionselektronik vorgesehen ist, wobei die Funktionselektronik mindestens einen Aktor ansteuert, insbesondere zum Betätigen einer Verriegelungsleiste und/oder dass die Funktionselektronik ein Drahtloskommunikationsmodul aufweist, insbesondere Bluetooth oder WLAN.

18. Werkzeugbereitstellungsvorrichtung nach einem der Ansprüche 1 bis 17, **dadurch gekennzeichnet, dass** ein mit einer Datenverarbeitungseinheit kommunizierendes Display vorgesehen ist zur Anzeige des Vorhandenseins und/oder Nichtvorhandenseins von Werkzeugen und/oder von Werkzeugnutzungsdaten und/oder Benutzerdaten.

19. Werkzeugbereitstellungsvorrichtung nach einem der Ansprüche 1 bis 18, **dadurch gekennzeichnet, dass** zumindest ein Signalelement (28) vorgesehen ist, insbesondere ein optisches Signalelement, vorzugsweise in Form einer Leuchtdiode (LED), oder ein akustisches Signalelement, welches dazu bestimmt und ausgebildet ist, dass Vorhandensein oder Fehlen eines Werkzeugs (9) in einem Behältnis (6) zu signalisieren.

20. Werkzeugbereitstellungsvorrichtung nach Anspruch 19, **dadurch gekennzeichnet, dass** das Signalelement (28) in einem am Gehäuse (3) vorgesehenen Kantenschutzelement (44) angeordnet ist.

21. Werkzeugbereitstellungsvorrichtung nach einem der Ansprüche 1 bis 20, **dadurch gekennzeichnet, dass** ein Signalelement (28) in einem Behältnis (6) und/oder einer Frontseite (30) eines Behältnisses (6) und/oder an einem Display vorgesehen ist.

22. Werkzeugbereitstellungsvorrichtung nach einem der Ansprüche 1 bis 21, **dadurch gekennzeichnet, dass** zumindest eine Signaleinheit (47) vorgesehen ist, welche dazu eingerichtet und bestimmt ist, den Schließzustand der Werkzeugbereitstellungsvorrichtung und/oder den Akkuladestand einer elektrischen Energieversorgungseinheit (48) und/oder die Vollständigkeit eines Werkzeugbestands zu signalisieren, wobei die Signaleinheit (47) insbesondere an einem Griffbereich oder einem Funktionsbereich (19) am Gehäuse (3) vorgesehen ist.

23. Werkzeugbereitstellungsvorrichtung nach einem der Ansprüche 1 bis 22, **dadurch gekennzeichnet, dass** zumindest ein Detektor (11) eine elektrische Steckverbinderschnittstelle (36) zur Aufnahme eines elektrischen Steckelements (37), insbesondere eines Steckers einer mobilen Leitungskupplung, aufweist.

24. Werkzeugbereitstellungsvorrichtung nach einem der Ansprüche 1 bis 23, **dadurch gekennzeichnet, dass** zumindest ein Behältnis (6), insbesondere eine Schublade, mit einem Wägesystem ausgerüstet ist, welches mit einer Gewichtsauswertung gekoppelt ist.

## Claims

1. Tool provision device, in particular workshop trolley, workbench or tool cupboard, which has a housing (3) and containers (6) arranged therein, particularly drawers, wherein in a container (6) is provided at least one tool carrier (7) which has several receptacles (8) for tools (9) and to the receptacles (8; 8a, 8b) is assigned respectively one detector (11) for the detection of the presence of a tool (9) in the receptacle (8; 8a, 8b),
wherein the detector (11) has a pushbutton switch (12) having a pushbutton element (13, 13a, 13b), wherein the pushbutton element (13, 13a, 13b) engages through an opening (15) in the tool carrier (7) and projects with an effective surface (16) into the receptacle (8; 8a, 8b), wherein in the case of at least one receptacle (8a) of the first type the opening (15) use a breakthrough passing through the wall of the tool carrier (7) below the receptacle (8a) and the pushbutton element (13, 13a) projects from below through the base (42) of a receptacle (8a) of the first type and wherein at least one receptacle (8; 8a, 8b) a holding element (18) is arranged which functions as a pressure booster for a tool (7), **characterised in that** in the case of at least one receptacle (8b) of the second type the pushbutton element (13, 13b) projects laterally into the receptacle (8b) of the second type.

2. Tool provision device according to claim 1 **characterised in that** the pushbutton element (13) is a plunger (13a), in particular a spring-loaded plunger, a leg, in particular a sprung leg or a lever (13b), in particular a sprung lever.

3. Tool provision device according to claim 1 or 2, **characterised in that** the pushbutton switch (12) is arranged in a supporting body (24).

4. Tool provision device according to any of claims 1 to 3, **characterised in that** the pushbutton switch (12) or a supporting body (24) accommodating the pushbutton switch (12) is supported at least indirectly at the base of the container (6).

5. Tool provision device according to any of claims 1 to 4, **characterised in that** the pushbutton switch (12) is fastened on a circuit board (14) which is arranged on the base of the container (6) below the tool carrier (7).

6. Tool provision device according to any of claims 1 to 5, **characterised in that** to each receptacle (8) is assigned a detector (11), wherein all detectors (11) are arranged in a horizontal plane.

7. Tool provision device according to any of claims 1 to 6, **characterised in that** a receptacle (8) has a cutout (10) in the tool carrier (7) adapted to the form of a specific tool.

8. Tool provision device according to any of claims 1 to 7, **characterised in that** the holding element (18) is a brace-shaped holding element or a magnetic holder.

9. Tool provision device according to any of claims 1 to 8, **characterised in that** a data processing unit provided which is specified and designed to receive signals from the detector or detectors (11) and to record and document a removal and return of a tool.

10. Tool provision device according to claim 9, **characterised in that** by means of the data processing unit, tool use data and/or tool state data and/or tool user data can be recorded.

11. Tool provision device according to any of claims 1 to 10, **characterised in that** the tool carrier (7) is formed by a soft foam inlay.

12. Tool provision device according to any of claims 5 to 11, characterised that on the circuit board (14) is shown the outline (17) of one or more tools (9).

13. Tool provision device according to any of claims 5 to 12, **characterised in that** several circuit boards (14) are arranged next to one another on the base of the container (6).

14. Tool provision device according to claim 13, **characterised in that** each circuit board (14) has a modular dimension adapted to the dimensions of the container (6), such that the circuit boards (14) together cover the base surface.

15. Tool provision device according to any of claims 1 to 14, **characterised in that** in the housing (3) is arranged at least one cable carrying device (25) for electrical connecting lines, in particular for electrical connecting lines between circuit boards (14) in a container (6) and/or between circuit boards (14) and a data processing unit.

16. Tool provision device according to any of claims 1 to 15, **characterised in that** a locking system is provided by means of which the containers (6) in the housing (3) can be centrally locked.

17. Tool provision device according to any of claims 1 to 16, **characterised in that** a functional electronic is provided, wherein the functional electronic controls at least one actuator, in particular for operating a locking bar, and/or the functional electronic has a wireless communication module, in particular Bluetooth or WLAN.

18. Tool provision device according to any of claims 1 to 17, **characterised in that** a display is provided which communicates with the data processing unit in order to display the presence and/or absence of tools and/or vehicle use data and/or user data.

19. Tool provision device according to any of claims 1 to 18, **characterised in that** at least one signal element (28) is provided, in particular an optical signal element, preferably in the form of a light emitting diode (LED), or an acoustical signal element, which is specified and designed to signal the presence or absence of a tool (9) in a container (6).

20. Tool provision device according to claim 19, **characterised in that** the signal element (28) is arranged in an edge protection element (44) provided at the housing (3).

21. Tool provision device according to any of claims 1 to 20, **characterised in that** a signal element (28) is provided in a container (6) and/or a front side (30) of a container (6) and/or at a display.

22. Tool provision device according to any of claims 1 to 21, **characterised in that** at least one signal unit (47) is provided which is configured and specified to signal the closing state of the tool provision device and/or the battery charging state of an electrical energy supply unit (48) and/or the completeness of a tool collection, wherein the signal unit (47) is provided in particular at a handle region or a functional region (19) at the housing (3).

23. Tool provision device according to any of claims 1 to 22, **characterised in that** at least one detector (11) has an electrical plug connection interface (36) for receiving an electrical plug element (37), in particular a plug of a mobile line coupling.

24. Tool provision device according to any of claims 1 to 23, **characterised in that** at least one container (6), in particular a drawer, is equipped with a weighing system which is coupled to a weight evaluation device.

## Revendications

1. Dispositif de fourniture d'outils, en particulier chariot d'atelier, établi ou armoire à outils, qui présente un boîtier (3) et des récipients (6), en particulier des tiroirs, disposés dans celui-ci, dans lequel au moins un porte-outils (7) est prévu dans un récipient (6) qui présente plusieurs logements (8) pour des outils (9) et respectivement un détecteur (11) est associé aux logements (8 ; 8a, 8b) pour détecter la présence d'un outil (9) dans le logement (8 ; 8a, 8b),
dans lequel le détecteur (11) présente un commutateur à bouton-poussoir (12) avec un élément de bouton-poussoir (13, 13a, 13b), dans lequel l'élément de bouton-poussoir (13, 13a, 13b) traverse une ouverture (15) dans le porte-outils (7) et pénètre avec une surface active (16) dans le logement (8 ; 8a, 8b), dans lequel, dans le cas d'au moins un logement (8a) de premier type, l'ouverture (15) est une percée traversant la paroi du porte-outils (7) sous le logement (8a) et l'élément de bouton-poussoir (13, 13a) pénètre par le bas à travers le fond (42) d'un logement (8a) de premier type et dans lequel un élément de support (18) est disposé dans au moins un logement (8 ; 8a, 8b), élément qui fait office d'amplificateur de pression pour un outil (7), **caractérisé en ce que**, dans le cas d'au moins un logement (8b) de second type, l'élément de bouton-poussoir (13, 13b) pénètre latéralement dans le logement (8b) de second type.

2. Dispositif de fourniture d'outils selon la revendication 1, **caractérisé en ce que** l'élément de bouton-poussoir (13) est un poussoir (13a), en particulier un poussoir à ressort, une branche, en particulier une branche de ressort ou un levier (13b), en particulier un levier à ressort.

3. Dispositif de fourniture d'outils selon la revendication 1 ou 2, **caractérisé en ce que** le commutateur à bouton-poussoir (12) est disposé dans un corps de support (24).

4. Dispositif de fourniture d'outils selon l'une quelconque des revendications 1 à 3, **caractérisé en ce que** le commutateur à bouton-poussoir (12) ou un corps de support (24) recevant le commutateur à bouton-poussoir (12) s'appuie au moins indirectement sur le fond du récipient (6).

5. Dispositif de fourniture d'outils selon l'une quelconque des revendications 1 à 4, **caractérisé en ce que** le commutateur à bouton-poussoir (12) est fixé sur une carte de circuit imprimé (14) qui est disposée sur le fond du récipient (6) sous le porte-outils (7).

6. Dispositif de fourniture d'outils selon l'une quelconque des revendications 1 à 5, **caractérisé en ce qu'**un détecteur (11) est associé à chaque logement (8), dans lequel tous les détecteurs (11) sont disposés dans un plan horizontal.

7. Dispositif de fourniture d'outils selon l'une quelconque des revendications 1 à 6, **caractérisé en ce qu'**un logement (8) présente un évidement (10) dans le porte-outils (7) adapté à la forme d'un outil spécifique.

8. Dispositif de fourniture d'outils selon l'une quelconque des revendications 1 à 7, **caractérisé en ce que** l'élément de support (18) est un élément de support en forme de pince ou un support magnétique.

9. Dispositif de fourniture d'outils selon l'une quelconque des revendications 1 à 8, **caractérisé en ce qu'**une unité de traitement de données est prévue, qui est destinée à et conçue pour recevoir des signaux du ou des détecteurs (11) et pour enregistrer et documenter un retrait et un retour d'un outil.

10. Dispositif de fourniture d'outils selon la revendication 9, **caractérisé en ce que** des données d'utilisation d'outil et/ou des données d'état d'outil et/ou des données d'utilisateur d'outil peuvent être enregistrées au moyen de l'unité de traitement de données.

11. Dispositif de fourniture d'outils selon l'une quelconque des revendications 1 à 10, **caractérisé en ce que** le porte-outils (7) est formé par un insert en mousse souple.

12. Dispositif de fourniture d'outils selon l'une quelconque des revendications 5 à 11, **caractérisé en ce que** le pourtour (17) d'un ou de plusieurs outils (9) est représenté sur la carte de circuit imprimé (14).

13. Dispositif de fourniture d'outils selon l'une quelconque des revendications 5 à 12, **caractérisé en ce que** plusieurs cartes de circuit imprimé (14) sont disposées côte à côte sur le fond du récipient (6).

14. Dispositif de fourniture d'outils selon la revendication 13, **caractérisé en ce que** chaque carte de circuit imprimé (14) comporte une dimension modulaire adaptée aux dimensions du récipient (6), de sorte que les cartes de circuit imprimé (14) couvrent ensemble la surface de fond.

15. Dispositif de fourniture d'outils selon l'une quelconque des revendications 1 à 14, **caractérisé en ce qu'**au moins un dispositif de support de câble (25) est disposé dans le boîtier (3) pour des lignes de connexion électriques, en particulier pour des lignes de connexion électriques entre des cartes de circuit imprimé (14) dans un récipient (6) et/ou entre des cartes de circuit imprimé (14) et une unité de traitement de données.

16. Dispositif de fourniture d'outils selon l'une quelconque des revendications 1 à 15, **caractérisé en ce qu'**un système de verrouillage est prévu au moyen duquel les récipients (6) sont verrouillables de manière centralisée dans le boîtier (3).

17. Dispositif de fourniture d'outils selon l'une quelconque des revendications 1 à 16, **caractérisé en ce qu'**une électronique de fonctionnement est prévue, dans lequel l'électronique de fonctionnement commande au moins un actionneur, en particulier pour actionner une barre de verrouillage et/ou **en ce que** l'électronique de fonctionnement présente un module de communication sans fil, en particulier Bluetooth ou WLAN.

18. Dispositif de fourniture d'outils selon l'une quelconque des revendications 1 à 17, **caractérisé en ce qu'**un écran communiquant avec une unité de traitement de données est prévu pour afficher la présence et/ou l'absence d'outils et/ou de données d'utilisation d'outil et/ou de données d'utilisateur.

19. Dispositif de fourniture d'outils selon l'une quelconque des revendications 1 à 18, **caractérisé en ce qu'**au moins un élément de signal (28) est prévu, en particulier un élément de signal optique, de préférence sous forme d'une diode électroluminescente (LED), ou un élément de signal acoustique qui est destiné à et conçu pour signaler la présence ou l'absence d'un outil (9) dans un récipient (6).

20. Dispositif de fourniture d'outils selon la revendication 19, **caractérisé en ce que** l'élément de signal (28) est disposé dans un élément de protection de bord (44) prévu sur le boîtier (3).

21. Dispositif de fourniture d'outils selon l'une quelconque des revendications 1 à 20, **caractérisé en ce qu'**un élément de signal (28) est prévu dans un récipient (6) et/ou une face avant (30) d'un récipient (6) et/ou sur un écran.

22. Dispositif de fourniture d'outils selon l'une quelconque des revendications 1 à 21, **caractérisé en ce qu'**au moins une unité de signal (47) est prévue, qui est configurée et destinée à signaler l'état de fermeture du dispositif de fourniture d'outils et/ou l'état de charge de batterie d'une unité d'alimentation électrique (48) et/ou l'intégralité d'un stock d'outils, dans lequel l'unité de signal (47) est prévue en particulier au niveau d'une zone de poignée ou une zone fonctionnelle (19) sur le boîtier (3).

23. Dispositif de fourniture d'outils selon l'une quelconque des revendications 1 à 22, **caractérisé en ce qu'**au moins un détecteur (11) présente une interface de connecteur électrique (36) pour recevoir un élément de connexion électrique (37), en particulier un connecteur d'un accouplement de ligne mobile.

24. Dispositif de fourniture d'outils selon l'une quelconque des revendications 1 à 23, **caractérisé en ce qu'**au moins un récipient (6), en particulier un tiroir, est équipé d'un système de pesée qui est couplé à une évaluation de poids.
